# EUROPEAN PATENT APPLICATION

(11) **EP 1 708 227 A1**
(43) Date of publication of application: **04.10.2006**
(21) Application number: 05795165.9
(22) Date of filing: 14.10.2005
(51) Int. Cl.: H01J 1/312, G09G 3/20, G09G 3/22, H01J 29/04, H01J 31/12

(54) **ELECTRON EMITTING DEVICE AND ELECTRON EMITTING METHOD**

(30) Priority: 14.10.2004 JP 2004300392; 15.02.2005 JP 2005038151; 16.09.2005 US 229038
(71) Applicant: NGK INSULATORS, LTD., Nagoya-shi, Aichi 467-8530 (JP)
(72) Inventor: OHWADA, Iwao, c/o NGK Insulators, Ltd., Nagoya-shi, Aichi 467-8530 (JP); AKAO, Takayoshi, c/o NGK Insulators, Ltd., Nagoya-shi, Aichi 467-8530 (JP); GOTO, Naoki, c/o NGK Insulators, Ltd., Nagoya-shi, Aichi 467-8530 (JP); SUGIYAMA, Tomohiko, c/o NGK Insulators, Ltd., Nagoya-shi, Aichi 467-8530 (JP)
(74) Representative: Naylor, Matthew John
(86) International application number: PCT/JP2005/019346
(87) International publication number: WO 2006/041217

(57) **Abstract**

An electron-emitting apparatus includes an electron-emitting element having a lower electrode, an emitter section having a dielectric material, and a plurality of upper electrodes having micro through holes, and a drive voltage applying circuit having a circuit for applying a drive voltage Vin between the lower electrode and the upper electrode. The drive voltage applying circuit applies the drive voltage between the lower electrode and the upper electrode to set an element voltage Vka, which is a potential of the upper electrode relative to a potential of the lower electrode, at a negative voltage for a charge accumulation period Td so as to accumulate electrons in the emitter section, and to set the element voltage Vka at a predetermined positive voltage for an electron emission period Th so as to emit electrons from the emitter section. Further, the drive voltage applying circuit stepwise increases the positive voltage during the electron emission period Th and separately emits the electrons accumulated in the emitter section a plurality of times.

## Description

### Technical Field

The present invention relates to an electron-emitting apparatus comprising an element having an emitter section made of a dielectric material, a lower electrode disposed below the emitter section, and an upper electrode disposed above the emitter section and an electron-emitting method using the element.

### Background Art

Conventionally, an electron-emitting apparatus is known that comprises an electron-emitting element including an emitter section made of a dielectric material, a lower electrode (lower electrode layer) disposed below the emitter section, and an upper electrode (upper electrode layer) disposed above the emitter section and having numerous micro through holes. In the electron-emitting apparatus, a drive voltage is applied between the upper electrode and the lower electrode to reverse the polarization of the dielectric material and to thereby emit electrons through the micro through holes in the upper electrode (e.g., refer to Japanese Unexamined Patent Application Publication No. 2005-183361).

In the electron-emitting device, upon setting the potential of the upper electrode relative to (or with respect to) the potential of the lower electrode (i.e., the potential difference between the lower electrode and the upper electrode with the potential of the lower electrode as the reference, hereinafter, also referred to as "element voltage") to a negative voltage whose absolute value is larger than a predetermined level, electrons are supplied from the upper electrode to the emitter section, thus to accumulate the electrons in (on) the emitter section. Further, upon setting the element voltage to a positive voltage whose absolute value is larger than another predetermined level when electrons have been accumulated in the emitter section, the electrons accumulated in the emitter section are emitted in the upward direction of the upper electrode via the micro through holes.

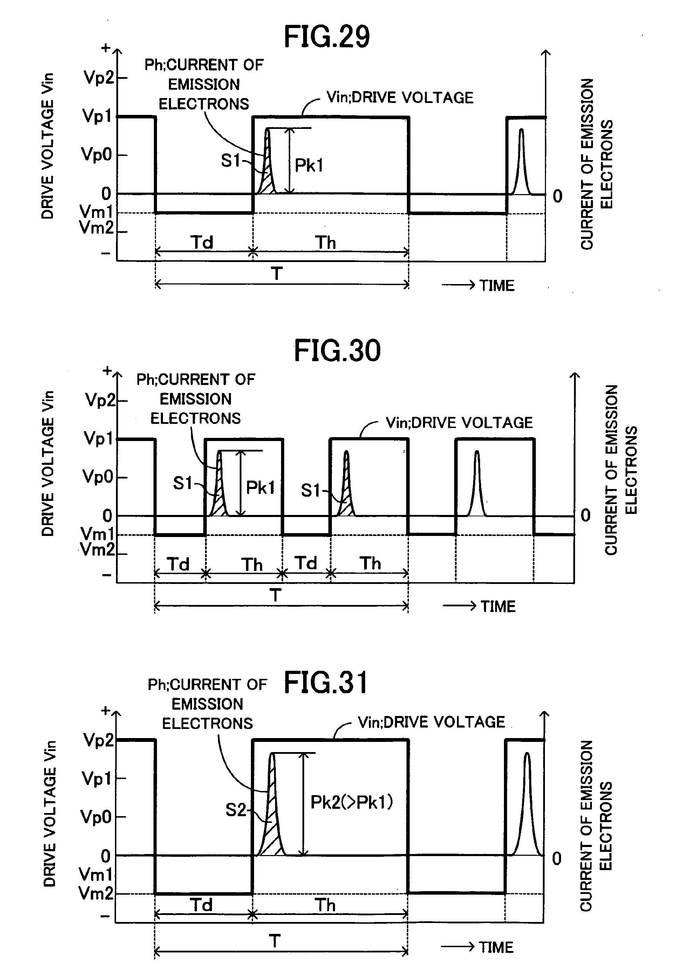

Specifically, referring to Fig. 29, a drive voltage Vin applied between the upper electrode and the lower electrode is set at the negative voltage Vm1 during a charge accumulation period Td. Thus, the electrons are accumulated in the emitter portion. Subsequently, the drive voltage Vin is changed to set the element voltage at the positive voltage Vp1 during an electron-emission period Th. Thus, as shown by current Ph of emitted electrons in Fig. 29, the electrons accumulated in the emitter section are emitted in the upward direction of the upper electrode.

### Summary of the Invention

The above-mentioned electron-emitting apparatus is used as a display, a backlight of a liquid crystal screen, or, various electron-emitting sources. Therefore, it is preferable that the amount of emitted electrons (e.g., the amount expressed as an area S1 shaded in Fig. 29, and referred to as "the total amount of electron emission" or "electron emission total amount" in this specification) be large during a predetermined period T.

In order to increase the amount of emitted electrons (electron emission total amount) within the predetermined period T, the charge accumulation period Td and electron-emission period Th are set to be short, thereby increasing the number of electron-emitting times during the predetermined period T, as shown in Fig. 30. However, according to this method, polarization reversal times of the electron-emitting element are increased (i.e., the polarization reversal occurs frequently), and therefore, the lifetime of the electron emitting element may be reduced (shortened).

On the other hand, as shown in Fig. 31, in order to increase the amount of emitted electrons within the predetermined period T, the negative voltage may be changed from Vm1 to Vm2 (|Vm2|>|Vm1|) to increase the amount of accumulated electrons once (i.e., per one accumulation operation). Further, the positive voltage may be changed from Vp1 to Vp2 (|Vp2|>|Vp1|) to increase the amount of emitted electrons per one emission operation (expressed by an area S2 corresponding to a shaded portion in Fig. 31). However, according to this method, a peak value Pk2 of the current of emitted electrons shown in Fig. 31 is larger than a peak value Pk1 shown in Fig. 29. Thus, as will be obviously understood, a larger amount of electrons are emitted within a short time period (per one operation for emitting electrons). As a result, inrush current flows through the electron-emitting element, thereby to generate a large amount of heat.
Thus, the element may be deteriorated.

Moreover, an electron-emitting apparatus which operates as illustrated in Fig.31 is not a preferable one if the "target of electron irradiation" such as a phosphor, onto which electrons emitted from an electron-emitting element is irradiated, has a tendency to degrade in its characteristic due to an excessive amount of electron irradiation for a given period of time, and/or due to continuous electron irradiation for a long period of time.

The present invention is devised to solve the above-mentioned problems. It is one of objects of the present invention to provide an electron-emitting apparatus having a long lifetime and capable of emitting a large total amount of electrons, and an electron-emitting method by which the total amount of emitted electrons is increased while avoiding the shortening the lifetime of the electron-emitting element.

In order to attain the above-mentioned object, an electron-emitting apparatus according to the present invention comprises an element (an electron-emitting element) including: an emitter section made of a dielectric material; a lower electrode disposed below the emitter section; and an upper electrode disposed above the emitter section to oppose the lower electrode with the emitter section sandwiched therebetween, the upper electrode having a plurality of micro through holes and formed in such a manner that its surface around the circumference of the micro through holes facing the emitter section is apart from the emitter section.

The element supplies electrons to the emitter section from the upper electrode and accumulates the electrons in the emitter section, when an element voltage (said element voltage), as a potential of the upper electrode relative to a potential of the lower electrode, is a negative voltage whose absolute value is larger than a predetermined level. Further, the element emits the electrons accumulated in the emitter section via the micro through holes when the element voltage is a positive voltage whose absolute value is larger than another predetermined level while (if) the electrons are (have been) accumulated (i.e., stored or held) in the emitter section.

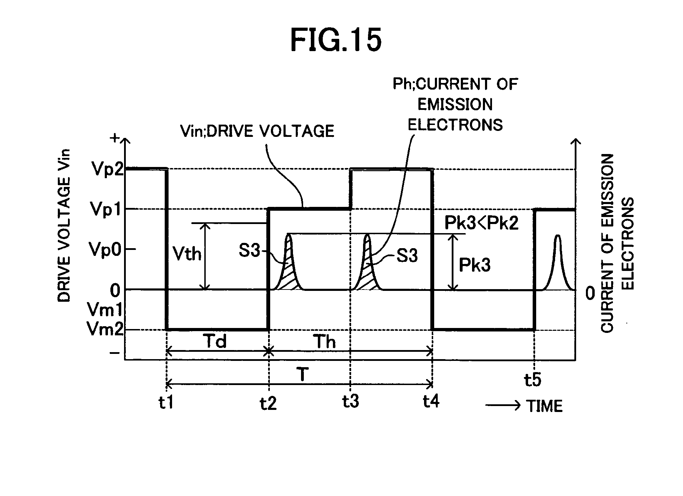

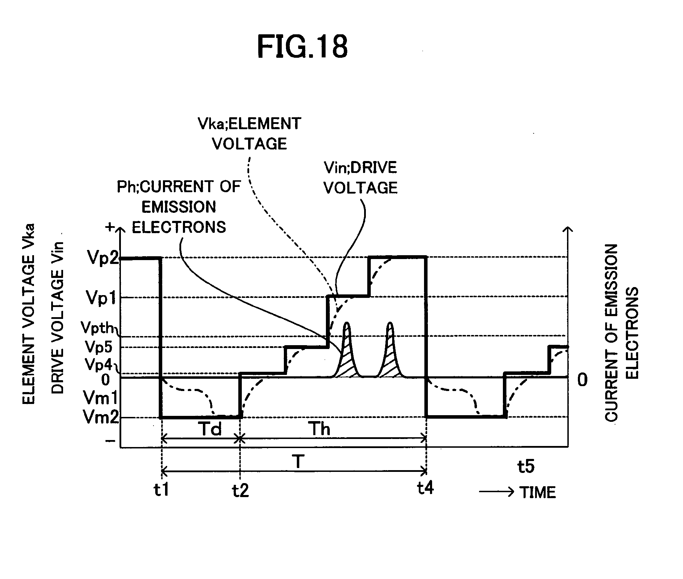

Furthermore, the electron-emitting apparatus according to the present invention comprises drive voltage applying means for applying a drive voltage between the upper electrode and the lower electrode to set the element voltage at the negative voltage and thereafter to set the element voltage at the positive voltage. The drive voltage applying means increases the positive voltage stepwise (for example, refer to Fig. 15 and Fig. 18).

Thus, upon setting the element voltage at the negative voltage, electrons are accumulated in the emitter section. Then, the accumulated electrons are (gradually) emitted every time the element voltage is increased stepwise.

In other words, the electrons which were (have been) accumulated in the emitter section by one electron-accumulation operation are emitted via the micro through holes of the upper electrode a plurality of times (the electrons are emitted a plurality of times by a divided amount). Therefore, even if the level of the negative voltage is (is set) larger and thus a large amount of electrons are accumulated in the emitter section (e.g., in the case of setting the negative voltage at the voltage Vm2), the amount of emitted electrons per a single electron-emission operation (i.e., per each emission) is smaller than that in the conventional case shown in Fig. 31 (that is, for example, the peak value Pk3 of the current of emitted electrons illustrated in Fig. 15 is smaller than the peak value Pk2 of the current of emitted electrons of Fig. 31). As a result, since the large inrush current flowing locally through the electron-emitting element is avoided, the deterioration in the element due to the heating is prevented and the amount of emitted electrons (electron emission total amount) for the predetermined period T is increased. Further, the dipoles in the emitter section rotate only once during a period from the one (once) electron-accumulation to the emission of electrons accumulated by the electron accumulation. Therefore, since the number of times for polarization reversal of the dipoles is not increased, the deterioration in the element is suppressed.

In addition to that, compared with a case where a large positive voltage is applied to the element immediately after electron accumulation, it is possible to relatively reduce the number of dipoles that go through positive polarization reversal by each one stepped-increase in the drive voltage, which helps to prevent the occurrence of excessive inrush current in the element. As a consequence thereof, unnecessary electron emission can be avoided. Moreover, it becomes also possible to increase the element voltage at a relatively high rate because it is not necessary to be concerned with any unnecessary electron emission. Thus, it is possible to reduce "an amount of the leakage of accumulated electrons to the upper electrode" which leakage may occur when the element voltage is increased gradually. Consequently, it is possible to increase the total amount of emitted electrons.

Note that the number of steps is not limited in changing the positive voltage stepwise. Therefore, for example, the element voltage may be firstly increased from the first voltage to the second voltage larger than the first voltage, then, it may be increased from the second voltage to another voltage larger than the second voltage, and then, it may be thereafter changed to the negative voltage.

An electron emission apparatus according to another embodiment of the present invention comprises the above electron emission element, and further comprises drive voltage applying means for applying a drive voltage between the lower electrode and the upper electrode in such a manner that the drive voltage causes the element voltage to reach the negative voltage in order that electrons are accumulated in the emitter section, and then causes the element voltage to reach the positive voltage in order that the accumulated electrons are emitted.

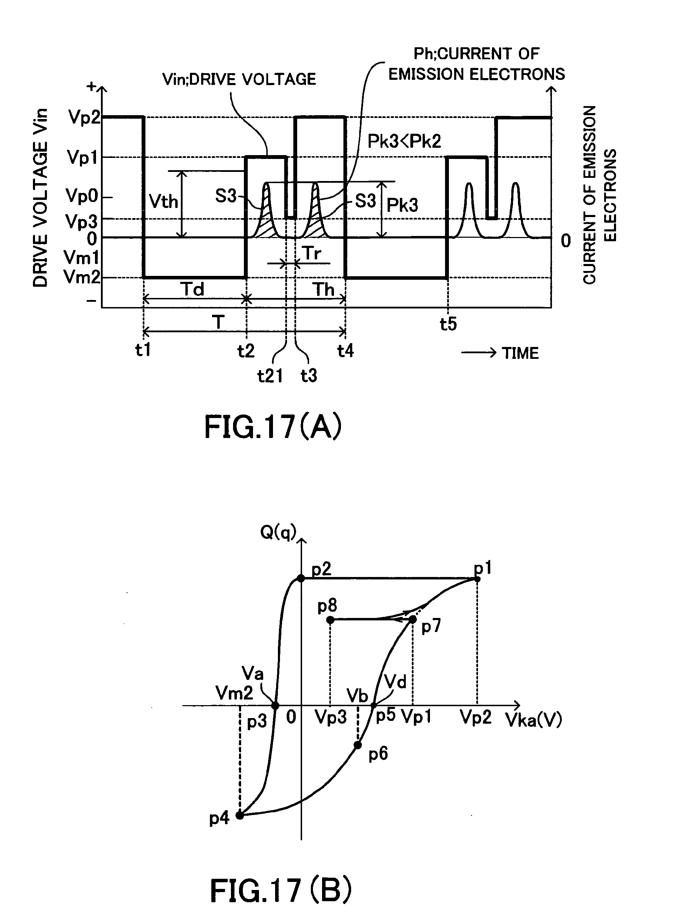

The drive voltage applying means is configured to apply, as a drive voltage for causing the element voltage to reach the positive voltage, between the lower electrode and the upper electrode, a voltage which has a plurality of pulses generated intermittently (a plurality of pulses having an intermittent waveform pattern). The maximum value of each of the pulses is not less than the maximum value of the immediately preceding pulse so that the maximum values of the pulses are on the increase. In addition, the voltage alters to keep the element voltage at a level which causes no electron accumulation into the emitter section during each interval between the successive pulses. (refer to Fig.17, Fig.19, Fig.20, and Fig.22). In such a waveform pattern, the maximum value of each pulses (the maximum value of a voltage pulse for electron emission) is a voltage having a value sufficiently large for reversing dipoles of the emitter section (a positive polarization reversal) which have gone through reversals (negative polarization reversals) during the electron accumulation.

With the above configuration, electrons are emitted at a predetermined timing within a period where a voltage having a pulse (waveform) is applied. Moreover, it is possible to provide a time interval, in which no electron is emitted, between two successive electron emissions (i.e. an interval between two successive pulses). As a consequence, it is possible to achieve electron emission at any timing that meets the requirements of a display device, etc., to which the electron emission apparatus is applied. In other words, the apparatus can provide a substantial increase in the frequency of electron emissions.

Furthermore, the changing of a drive voltage in this way makes it possible to reduce the power consumption of the electron emission apparatus.

When changing the drive voltage, it is preferable that the drive voltage applied between the lower electrode and the upper electrode during the interval of the two successive pulses has an absolute value smaller than that of the coercive electric field voltage (coercive voltage) of the emitter section.

Herein, the coercive electric field voltage means "a voltage determined by the material of the emitter section and the thickness of the emitter section" at which polarization reversal (a phenomenon of the reversing of dipole orientation) occurs in the emitter section (a dielectric material). In an electron emission element employed in an electron emission apparatus according to the present invention, the absolute value of the positive coercive electric field voltage is larger than the absolute value of the negative coercive electric field voltage because of the structure of the upper electrode which is an "eaves structure" as described later, while the absolute value of the negative coercive electric field voltage is approximately equal to the absolute value of the coercive electric field voltage of the emitter.

Therefore, it is theoretically understood that no electron emission or electron accumulation occurs if the absolute value of a voltage applied between the lower electrode and the upper electrode within an interval between two successive pulses is smaller than the positive coercive electric field voltage; and in such a case, electrons stay in the emitter section.

Practically, however, a continuous applying of a voltage greater than the coercive electric field voltage (of the emitter section) of the element between the upper electrode and the lower electrode might cause electrons to travel on the surface of the emitter section and cause such electrons to leak into the portion of the upper electrode, said portion being in contact with the emitter section, thereby decreasing the amount of accumulated electrons.

Therefore, the absolute value of the above-described voltage applied between the lower electrode and the upper electrode within the interval between the two successive pulses should be set smaller than the coercive electric field voltage of the emitter section. If set so, the leakage of electrons does not occur; and in addition to that, no polarization reversal does not occur in the emitter section, which ensures that electrons held in the emitter section stay in the emitter section.

The above-described absolute value of the voltage applied between the lower electrode and the upper electrode within the interval between the two successive pulses should be, preferably, not more than 1/4 of the coercive electric field voltage of the emitter section. It is more preferable that the value be not more than 1 /10 thereof, and most preferable if 0V (zero volt). As the absolute value of the voltage becomes smaller, the advantageous effect that power consumption within in the electron emission element is reduced can be obtained.

Moreover, it is more preferable that the length of time from the start of the rising to the end of the falling of each pulse (Tps --- voltage pulse duration [width]) should be set shorter than the length of time from the end of the falling of each pulse to the start of the rising of the subsequent pulse (Trs --- voltage pulse pause period between successive two voltage pulses).

With such a pulse waveform configuration, the length of time within which a voltage larger than the coercive electric field voltage of the emitter section is being applied between the upper electrode and the lower electrode is shortened; and therefore, the amount of the above-mentioned leakage of electrons into the upper electrode is reduced. Consequently, the total amount of electron emission increases. Herein, it is preferable that the time length Tps (voltage pulse duration) should be not more than 1/2 of the time length Trs (voltage pulse pause period between successive two voltage pulses), and more preferably, it should be not more than 1/5 thereof.

In such an electron emission apparatus, there are many cases where the electron accumulation and the electron emission are repeatedly carried out. That is, said drive voltage applying means is configured to apply said drive voltage between the upper electrode and the lower electrode repeatedly.

When having such a configuration, it is preferable that, during a period from a timing when the drive voltage is set at a level to cause the element voltage to reach the negative voltage till a timing when the drive voltage is set at the level to cause the element voltage to reach the negative voltage again to restart the electron accumulation operation after the drive voltage is set at a level to cause the element voltage to reach the positive voltage, the drive voltage when causing the element voltage to reach the positive voltage should have such a waveform that the last pulse, which is generated immediately before the restart of the electron accumulation operation, has the longest pulse duration among said plurality of voltage pulses generated intermittently.

With such a pulse pattern, it is possible to stabilize the polarization state of the emitter section which is disordered due to application of a plurality of voltage pulses, by means of the voltage pulse immediately before the restart of the electron accumulation operation (the last voltage pulse). In addition, the above-mentioned leakage of electrons into the upper electrode will occur if the pulse durations of preceding pulses before the last pulse are set longer than the duration of the last pulse; and consequently, the total amount of electron emission might decrease. In contrast thereto, the last pulse is supposed to completely emit any remaining electrons that have still stayed in the emitter section. In other words, there is no more pulse provided for electron emission after the last voltage pulse without having another electron accumulation time period. Thus, even if it is assumed that any leakage of electrons into the upper electrode occurs due to the lengthened pulse duration of the last voltage pulse, such a leakage will have no adverse impact on electron emission performed after the last voltage pulse.

As a consequence thereof, it becomes possible for an electron emission apparatus to emit a large number of electrons steadily for a long time period. It should be noted that, in addition to setting the pulse duration as such, it is preferable to set the maximum value of the last pulse immediately before the restart of electron accumulation operation at a value significantly larger than those of a plurality of the other voltage pulses preceding the last voltage pulse. If set so, the above-described polarization stabilizing effect and so on will be emerged more efficiently.

Furthermore, if an electron emission apparatus is provided with a phosphor that illuminates by means of electrons emitted from said electron emission apparatus, it is possible to efficiently utilize the persistent light (remaining light, afterglow) of the phosphor by setting the time length Tps (voltage pulse duration) shorter than the time length Trs (voltage pulse pause period between successive two voltage pulses). That is, as the phosphor emits the persistent light after electron irradiation, the above configuration makes it possible to obtain a larger light emission amount while keeping energy involved in electron emission small.

In still another embodiment of the present invention, at least one pulse contained in the above-described pulse waveform (at least one pulse among a plurality of the voltage pulses) has such a pulse-characteristic that a voltage (a maximum voltage) according to said one pulse decreases to stop the emission of accumulated electrons at a point in time before the electron emission is completed if the voltage according to said one pulse (i.e. the voltage pulse) is kept unchanged (i.e., if a maximum voltage of said one pulse continues to be applied).

With such a pulse form, it is possible to emit electrons a plurality of times even when applying two or more pulse-formed voltages (voltage pulse) having the same maximum values. In other words, there is less necessity to have many pulses having the maximum value different from those of the others in order to achieve electron emission in a plural number of times. Further to that, as the voltage of the pulse (pulse-waveform) is decreased in the middle of electron emission, it is possible to shorten the duration of each pulse. As a consequence thereof, it is further possible to increase the frequency of electron emission.

It should be noted that it is preferable to set the durations of the second and subsequent pulses longer than that of the first pulse when applying a plurality of pulses having the same maximum value to the element for electron emission. This is because electrons can be emitted even with a short pulse duration as the amount of accumulated electrons is large at the time of the first application of the pulse-formed voltage (i.e., at the time of the first pulse). In addition to that reason, because the amount of the accumulated electrons remaining in the emitter section decreases by the first emission owing to the first pulse, elongating the duration of the second and subsequent pulses can ensure electron emission at the time of the application of the second pulse and the subsequent pulses.

According to one of the embodiments of the present invention, said drive voltage applying means comprises an electron accumulation voltage generation source that generates a negative voltage at its both ends for accumulating electrons in said emitter section; a sinusoidal wave generation circuit that generates a voltage fluctuating in a sinusoidal wave pattern at its both ends; a keeping voltage generation source that generates a voltage at its both ends for keeping the element voltage at a voltage level at which no accumulation of electrons into the emitter section occurs during an interval of the successive pulses; and a switching controlling means for connecting the upper electrode and the lower electrode respectively with said both ends of said electron accumulation voltage generation source, and thereafter, said both ends of said sinusoidal wave generation circuit, and said both ends of said keeping voltage generation source in an alternate manner.

With such a configuration, it is possible to accumulate the electrons in the emitter section by connecting the upper electrode and the lower electrode with the both ends of the electron accumulation voltage generation source, and thereafter, it is possiblet to apply a plurality of pulses by connecting the upper electrode and the lower electrode with the both ends of the sinusoidal wave generation circuit at appropriate timings.

Further with such a configuration, each of the pulses increases in a sinusoidal wave pattern. That is, it is possible to give an inclination to a plurality of pulses when increasing by means of a simple configuration.

An electron emission method according to the present invention is an electron emission method employing the above electron emission element, wherein an element voltage, which is the potential of the upper electrode with respect to the potential of the lower electrode, is set at a negative voltage to supply electrons from the upper electrode to the emitter section and to accumulate the electrons in the emitter section, and thereafter, the element voltage is increased to the first positive voltage to cause electrons accumulated in the emitter section to emit via the micro through holes, and thereafter, the element voltage is increased to the second positive voltage larger than the first voltage to cause electrons remaining in the emitter section to emit via the micro through holes.

According to such a method, in the same manner as the above-described electron emission apparatus of the present invention, electrons accumulated in the emitter section in one electron accumulation operation is emitted in a plural number of times. Accordingly, because of the same reason as above, it is possible to increase the amount of electron emission (total electron emission amount) during a given period T while avoiding the degradation of the element due to heating, increased number of polarization reversals, and so on.

Note that the number of voltage levels applied for electron emission is not limited. Therefore, for example, the element voltage may be firstly set at the first voltage (for the first electron emission) and then increased from the first voltage to the second voltage larger than the first voltage (for the second election emission), then, it may be increased from the second voltage to another voltage larger than the second voltage (for the third electron emission), thereby splitting electron emissions into three times or more.

Also in such a case, when increasing the element voltage from the first voltage to the second voltage, it is preferable to set the element voltage at the third voltage, which is smaller than the first voltage, and which does not causes the element to accumulate any of the electrons to the emitter section by, and then increase it to the second voltage.

According to such a setting above, because a period in which no electron is emitted within an interval of two successive electron emissions is provided, it is possible to emit electrons at timings in response to various requests.

Also in such a case, due to the above-described reason, it is preferable that the absolute value of the third voltage be smaller than the absolute value of the coercive electric field voltage of said emitter section, and the time length during which the first voltage is being applied be shorter than the time length during which the third voltage is being applied.

Furthermore, an electron emission method according to another aspect of the present invention comprises: a step of setting an element voltage, which is the potential of the upper electrode relative to (or with respect to) the potential of the lower electrode, at the negative voltage to supply electrons from the upper electrode to the emitter section and to accumulate the electrons in the emitter section, and thereafter, increasing the element voltage to the first positive voltage to cause electrons accumulated in the emitter section to emit via the micro through holes and decreasing the element voltage to the third voltage before the completion of the electron emission caused by the first positive voltage, and thereafter, increasing the element voltage again to the first positive voltage to cause electrons accumulated in the emitter section to emit via the micro through holes; and a step of thereafter increasing the element voltage to the second positive voltage larger than the first voltage to cause electrons remaining in the emitter section to emit via the micro through holes.

According to such a method, it is possible to achieve electron emission in a plural number of times by applying two or more pulses (voltage pulses) having the same maximum value. Therefore, it is not necessary to generate many pulses having various maximum values in order to increase the number of times of electron emission. Moreover, it is possible to increase the frequency of electron emissions because the duration of a pulse (voltage pulse duration) is shortened.

Further, the electron-emitting apparatus according to the present invention or the element to which the electron-emitting method according to the present invention is applied, preferably, comprises a phosphor which emits light by electron collision and which is disposed in the upper side of the upper electrode to oppose the upper electrode.

In general, if and when an excessively large amount of electrons collide with the phosphor, a part of the energy of the electrons changes to the heat and thus the amount of emission light from the phosphor is not increased. On the other hand, after ending the collision of electrons, the phosphor emits light (remaining light) whose amount decreases in accordance with the time elapse. Therefore, the phosphor can emit light with high efficiency, if electrons whose amount is proper in that energy of the electrons does not change to the heat are caused to collide with the phosphor, then, the collision of electrons is stopped, and then electrons are caused to collide with the phosphor again at the proper timing when an amount of light (remaining light) becomes small.

Therefore, as the electron-emitting apparatus or the electron-emitting method, according to the present invention, a large amount of emission light can be generated with small power-consumption by repeating the electron emission for a short period a plurality of times and causing the emitted electrons to collide with the phosphor, while suppressing an amount of emitted electrons for each of the electron emissions. As a result, it is possible to provide a display device showing a clear image with lower power-consumption or a light-emitting device capable of emitting a large amount of light.

In this case, preferably, the electron-emitting element used by the electron-emitting apparatus or the electron-emitting method further comprises: a collector electrode disposed near the phosphor; and collector voltage applying means for applying a voltage to the collector electrode so that the collector electrode generates an electric field which attracts the emitted electrons to the collector electrode side.

With this configuration, the electric field generated by the collector electrode can certainly cause the electrons emitted from the emitter section via the micro through holes of the upper electrode to collide with the phosphor. Further, the electric field generated by the collector electrode accelerates the electrons by applying the energy to the emitted electrons, thereby increasing the amount of emission light of the phosphor.

### Brief Description of the Drawings

Fig. 1 is a partial cross-sectional view showing an electron-emitting apparatus according to a first embodiment of the present invention;
Fig. 2 is a partial cross-sectional view showing the electron-emitting apparatus shown in Fig. 1, taken along a different plane;
Fig. 3 is a partial plan view showing the electron-emitting apparatus shown in Fig. 1;
Fig. 4 is an enlarged partial cross-sectional view showing the electron-emitting apparatus shown in Fig. 1;
Fig. 5 is an enlarged partial plan view showing an upper electrode shown in Fig. 1;
Fig. 6 is a diagram showing one state showing the electron-emitting apparatus shown in Fig. 1;
Fig. 7 is a graph showing the voltage-polarization characteristic of an emitter section shown in Fig. 1;
Fig. 8 is a diagram showing another state of the electron-emitting apparatus shown in Fig. 1;
Fig. 9 is a diagram showing another state of the electron-emitting apparatus shown in Fig. 1;
Fig. 10 is a diagram showing another state of the electron-emitting apparatus shown in Fig. 1;
Fig. 11 is a diagram showing another state of the electron-emitting apparatus shown in Fig. 1;
Fig. 12 is a diagram showing another state of the electron-emitting apparatus shown in Fig. 1;
Fig. 13 is a diagram showing a state of electrons emitted from an electron-emitting apparatus having no focusing electrode;
Fig. 14 is a diagram showing a state of electrons emitted from the electron-emitting apparatus shown in Fig. 1;
Fig. 15 is a time chart showing a drive voltage applied between the upper and lower electrodes by a drive voltage applying circuit shown in Fig. 1 and the current of emitted electrons indicating the amount of emitted electrons;
Fig. 16 is a circuit diagram showing the drive voltage applying circuit shown in Fig. 1, a focusing electrode potential applying circuit, and a collector voltage applying circuit;
Fig. 17(A) is a time chart showing a drive voltages applied between upper and lower electrodes by a drive voltage applying circuit in an electron-emitting apparatus according to a second embodiment of the present invention and the current of emitted electrons indicating the amount of emitted electrons and Fig. 17(B) is a graph showing the voltage-polarization characteristic of an emitter section;
Fig. 18 is a time chart showing a drive voltage applied between upper and lower electrodes by a drive voltage applying circuit in an electron-emitting apparatus and the current of emitted electrons indicating the amount of emitted electrons according to a third embodiment of the present invention;
Fig. 19 is a time chart showing a drive voltage applied between upper and lower electrodes by a drive voltage applying circuit in an electron-emitting apparatus and the current of emitted electrons indicating the amount of emitted electrons according to a fourth embodiment of the present invention;
Fig. 20 is a time chart showing a drive voltage applied between upper and lower electrodes by a drive voltage applying circuit in an electron-emitting apparatus and the current of emitted electrons indicating the amount of emitted electrons according to a fifth embodiment of the present invention;
Fig. 21 is a circuit diagram showing a drive voltage applying circuit of an electron-emitting apparatus according to a sixth embodiment of the present invention;
Fig. 22 is a time chart showing the drive voltage applied between upper and lower electrodes by the drive voltage applying circuit in the electron-emitting apparatus and the current of emission electrons indicating the amount of emission electrons according to the sixth embodiment of the present invention;
Fig. 23 is a circuit diagram showing the drive voltage applying circuit of an electron-emitting apparatus according to a modification of the sixth embodiment of the present invention;
Fig. 24 is a partial cross-sectional view showing an electron-emitting apparatus according to a seventh embodiment of the present invention;
Fig. 25 is a partial plan view of one modification of the electron-emitting apparatus according to the present invention;
Fig. 26 is a partial plan view showing another modification of the electron-emitting apparatus according to the present invention;
Fig. 27 is a partial cross-sectional view showing still another modification of the electron-emitting apparatus according to the present invention;
Fig. 28 is another partial cross-sectional view showing the electron-emitting apparatus shown in Fig. 27;
Fig. 29 is a time chart showing a drive voltage applied between upper and lower electrodes in a conventional electron-emitting apparatus and the current of emitted electrons indicating the amount of emitted electrons;
Fig. 30 is a time chart showing another drive voltage applied between the upper and lower electrodes in the conventional electron-emitting device and the current of emitted electrons indicating the amount of emitted electrons; and
Fig. 31 is a time chart showing still another drive voltage applied between the upper and lower electrodes in the conventional electron-emitting device and the current of emitted electrons indicating the amount of emitted electrons.

### Description of the preferred embodiment

Electron-emitting apparatuses and electron-emitting methods according to the embodiments of the present invention will now be described with reference to the drawings. The electron-emitting apparatus is applicable to electron beam irradiators, light sources, such as a backlight of a liquid crystal screen, electron-emitting sources of manufacturing apparatuses for electronic components, and the like. Note that in the description below, the electron-emitting apparatuses are applied to displays.

### (First embodiment)

### (Structure)

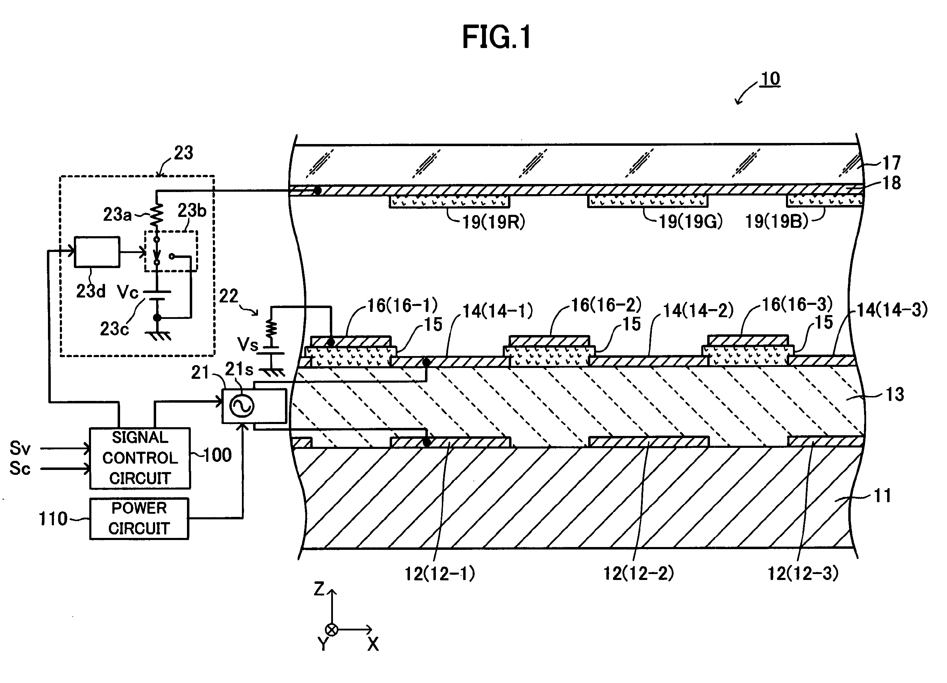

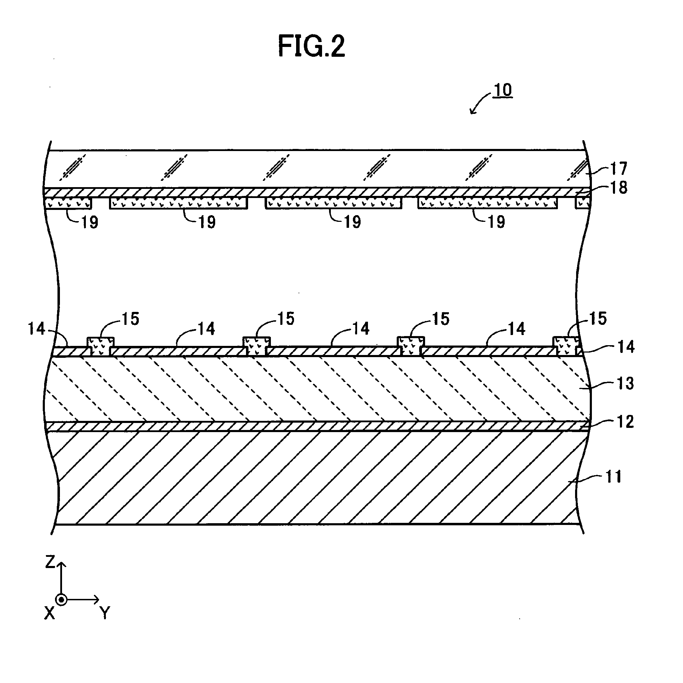

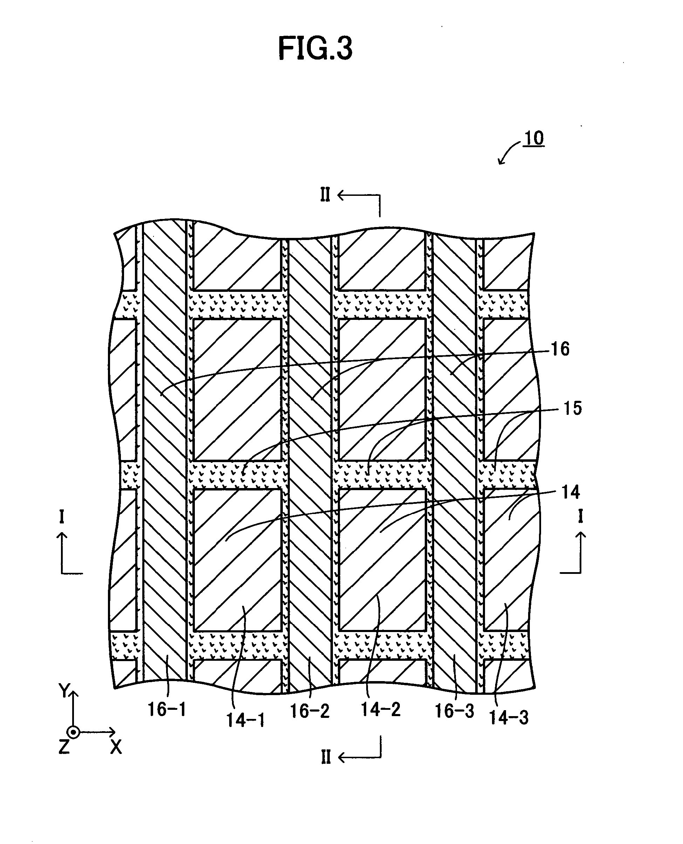

As shown in Figs. 1 to 3, an electron emitting apparatus 10 according to a first embodiment of the present invention comprises: a substrate 11; a plurality of lower electrodes (lower electrode layers) 12; an emitter section 13; a plurality of upper electrodes (upper electrode layers) 14; an insulating layers 15; and a plurality of focusing electrodes (focusing electrode layers) 16. Fig. 1 is a cross-sectional view showing the electron-emitting apparatus 10 taken along a line I-I in Fig. 3, which is a partial plan view showing the electron-emitting apparatus 10. Fig. 2 is a cross-sectional view showing the electron-emitting apparatus 10 taken by a plane along a line II-II in Fig. 3.

The substrate 11 is a thin plate having an upper surface and a lower surface parallel to the plane (X-Y plane) defined by the X axis and the Y axis perpendicular to each other. The thickness direction of the substrate 11 is the Z-axis direction perpendicular to both the X and Y axes. The substrate 11 is made of, e.g., glass or ceramics (preferably, a material containing zirconium oxide as a main component).

Each of the lower electrodes 12 is a layer made of a conductive material, e.g., silver or platinum in this embodiment, and is disposed (formed) on the upper surface of the substrate 11. In a plan view, each lower electrode 12 has a shape of a strip whose longitudinal direction of the strip is the Y-axis direction. As shown in Fig. 1, the adjacent two lower electrodes 12 are apart from each other by a predetermined distance in the X-axis direction. Note that in Fig. 1, the lower electrodes 12 represented by reference numerals 12-1, 12-2, and 12-3 are respectively referred to as a first lower electrode, a second lower electrode, and a third lower electrode for the convenience sake.

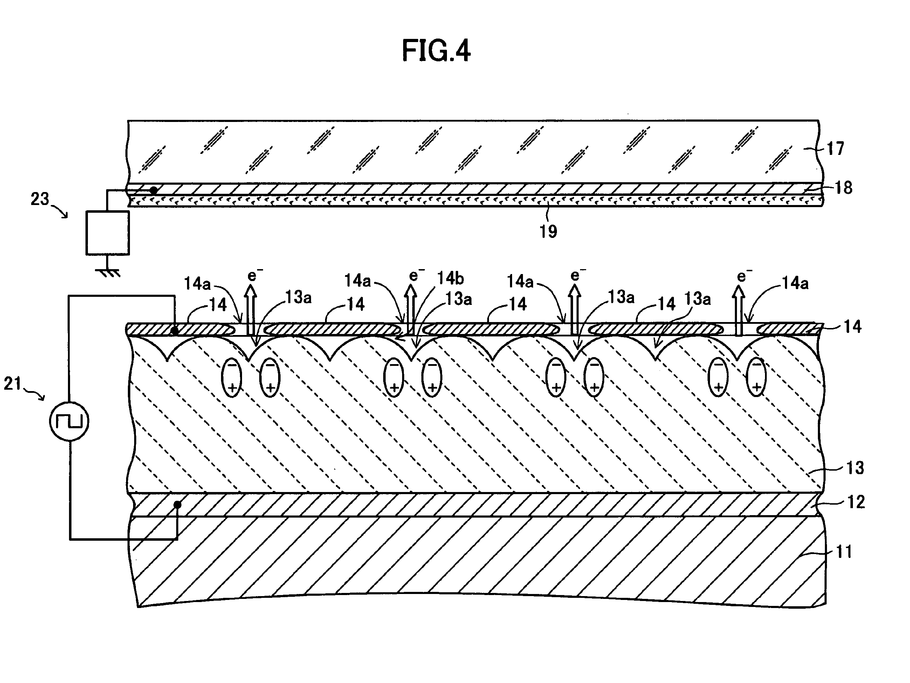

The emitter section 13 is made of a dielectric material having a high relative dielectric constant (for example, a three-component material PMN-PT-PZ composed of lead magnesium niobate (PMN), lead titanate (PT), and lead zirconate (PZ), and materials for the emitter section 13 will be described in detail below). The emitter section 13 is formed on the upper surfaces of the substrate 11 and lower electrodes 12. The emitter section 13 is a thin plate similar to the substrate 11. As shown in an enlarged view in Fig. 4, the upper surface of the emitter section 13 has irregularities (asperities) 13a formed by the grain boundaries of the dielectric material.

Each of the upper electrodes 14 is a layer made of a conductive material, e.g., platinum in this embodiment, and is formed on the upper surface of the emitter section 13. As shown in a plan view of Fig. 3, each upper electrode 14 has a shape of a rectangle having a short side and a long side respectively lying in the X-axis direction and the Y-axis direction. The upper electrodes 14 are apart from one another and are disposed (arranged) into a matrix. Each upper electrode 14 is opposed to the corresponding lower electrode 12. In a plan view, the upper electrode 14 is disposed at a position that overlaps the corresponding lower electrode 12.

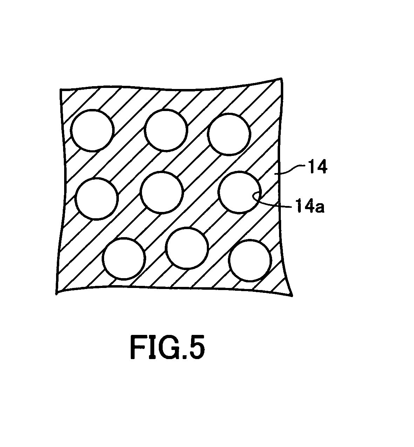

Furthermore, as shown in Figs. 4 and 5, which is a partial enlarged view of the upper electrode 14, each upper electrode 14 has a plurality of micro through holes 14a. Note that in Figs. 1 and 3, the upper electrodes 14 represented by reference numerals 14-1, 14-2, and 14-3 are respectively referred to as a first upper electrode, a second upper electrode, and a third upper electrode for the convenience sake. The upper electrodes 14 aligned in the same row with respect to the X-axis direction are connected to one another by a layer (not shown) made of a conductor and are maintained at the same electric potential. The surface of the upper electrodes 14 to oppose the emitter section 13 at the circumferences of a micro through holes 14a is apart from the emitter section 13 (i.e., upper surface of the emitter section 13), as shown by reference numeral 14b in Fig. 4. The structure of the upper electrode 14 may be referred to as an "eaves structure" for convenience.

The lower electrodes 12, the emitter section 13, and the upper electrodes 14 made of a platinum resinate paste are monolithically integrated by firing (baking). As a result of the firing for integration, the upper electrode 14 shrinks and its thickness of the upper electrode 14 reduces, for example, from 10 µm to 0.1 µm. Upon this shrinking, the micro through holes 14a are formed in the upper electrode 14. Note that the average diameter of the micro through holes 14a may be not less than 0.01 µm and not more than 10 µm.

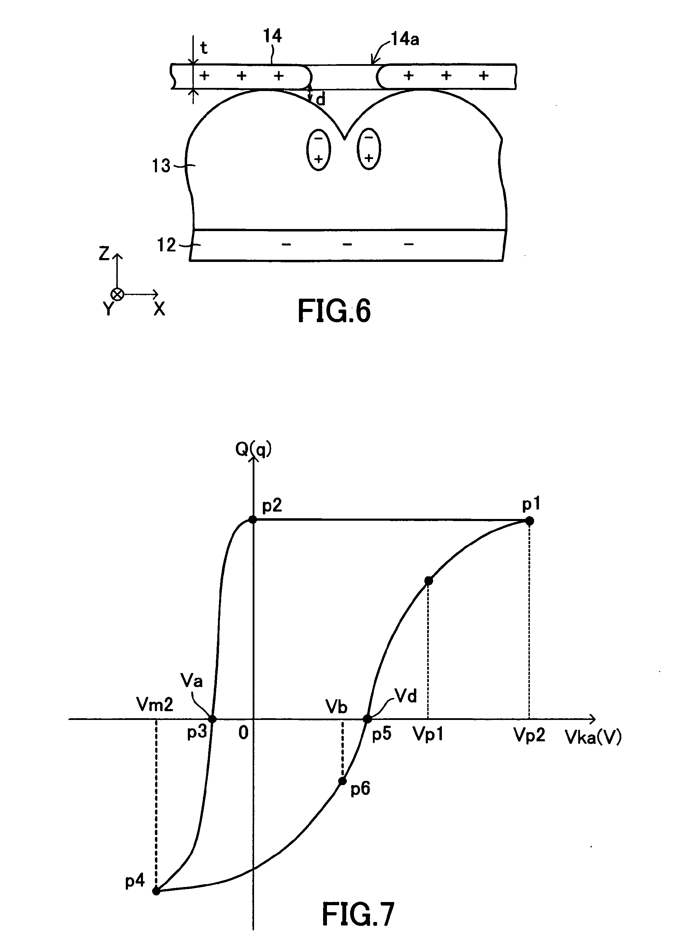

As shown in Fig. 6, a thickness t of the upper electrode 14 is 0.01 µm or more and 10 µm or less. Preferably, the thickness t is 0.05 µm or more and 1 µm or less. Further, a maximum d of the distance between the emitter section 13 (upper surface of the upper electrode 13) and the surface facing the emitter section 13 at the circumference of each of the through hole 14a (end of the through hole) is larger than 0 µm and 10 µm or less. Preferably, the maximum d is 0.01 µm or more and 1 µm or less.

As described above, the portion where an upper electrode 14 overlaps the lower electrode 12 in a plan view forms one (single) element for emitting electrons. For example, the first lower electrode 12-1, the first upper electrode 14-1, and the portion of the emitter section 13 sandwiched between the first lower electrode 12-1 and the first upper electrode 14-1 form a first element. The second lower electrode 12-2, the second upper electrode 14-2, and the portion of the emitter section 13 sandwiched between the second lower electrode 12-2 and the second upper electrode 14-2 form a second element. The third lower electrode 12-3, the third upper electrode 14-3, and the portion of the emitter section 13 sandwiched between the third lower electrode 12-3 and the third upper electrode 14-3 form a third element. In this manner, the electron-emitting apparatus 10 includes a plurality of independent electron-emitting elements.

The insulating layers 15 are disposed (formed) on the upper surface of the emitter section 13 so as to fill the gaps between the upper electrodes 14. The thickness (the length in the Z-axis direction) of each insulating layer 15 is slightly larger than the thickness (the length in the Z-axis direction) of each upper electrode 14. As shown in Figs. 1 and 2, the end portions of each insulating layer 15 in the X-axis direction and the Y-axis direction cover the end portions of the upper electrodes 14 in the X-axis and Y-axis directions, respectively.

Each of the focusing electrodes 16 is a layer made of a conductive material, e.g., silver in this embodiment, and are disposed (formed) on each of the insulating layers 15. As shown in a plan view of Fig. 3, each focusing electrode 16 has a shape of a strip whose longitudinal direction is the Y-axis direction. Each focusing electrode 16 is (formed) disposed between the upper electrodes of the elements adjacent to each other in the X-axis direction and is slightly obliquely above the upper electrodes. All the focusing electrodes 16 are connected to one another by a layer (not shown) made of a conductor and maintained at the same potential.

In Figs. 1 and 3, the focusing electrodes 16 represented by reference numerals 16-1, 16-2, and 16-3 are respectively referred to as a first focusing electrode, a second focusing electrode, and a third focusing electrode for the convenience sake. The second focusing electrode 16-2 lies between the first upper electrode 14-1 of the first element and the second upper electrode 14-2 of the second element and is located obliquely above the first and second upper electrodes 14-1 and 14-2. Similarly, the third focusing electrode 16-3 is between the second upper electrode 14-2 of the second element and the third upper electrode 14-3 of the third element and is located obliquely above the second and third upper electrodes 14-2 and 14-3.

The electron emitting apparatus 10 further comprises: a transparent plate 17; a collector electrode (collector electrode layer) 18; and phosphors 19.

The transparent plate 17 is made of a transparent material (e.g., glass or acrylic resin in this embodiment), and is disposed above the upper electrodes 14 so that the transparent plate 17 is apart from the upper electrodes 14 in the positive direction of the Z axis by a predetermined distance. The upper and lower surfaces of the transparent plate 17 are parallel to the upper surfaces of the emitter section 13 and the upper electrodes 14 (i.e., the upper and lower surfaces lie in the X-Y plane).

The collector electrode 18 is made of a conductive material (e.g., in this embodiment, a transparent conductive film made of indium tin oxide (ITO)) and is formed as a layer covering the entire lower surface of the transparent plate 17. In other words, the collector electrode 18 is disposed above the upper electrodes 14 to be opposed to the upper electrodes 14 apart from the upper electrode 14 for a predetermined distance.

Each phosphor 19 enters the exciting state by the collision of electrons, and emits red, green, or blue light in the transition from the exciting state to the base state. In a plan view, each phosphor 19 has substantially the same shape as that of the upper electrode 14 and is provided at the lower surface of the collector electrode 18 in a position overlapping the corresponding upper electrode 14. In Fig. 1, the phosphors 19 represented by reference numerals 19R, 19G, and 19B respectively emit red, green, and blue light. In this embodiment, the red phosphor 19R is disposed directly above the first upper electrode 14-1 (i.e., in the positive direction of the Z axis), the green phosphor 19G is disposed directly above the second upper electrode 14-2, and the blue phosphor 19B is disposed directly above the third upper electrode 14-3.

For example, the red phosphor may be made of Y₂O₂S:Eu, the green phosphor may be made of ZnS:Cu and Al, and the blue phosphor may be made of ZnS:Ag and Cl. Further, if the phosphor 19 is made of Y₂O₂S:Tb, a white phosphor which emits white light can be obtained. Or, the white phosphor can be manufactured by mixing the red phosphor (e.g., Y₂O₂S:Eu), the green phosphor (e.g., ZnS:Cu and Al), and the blue phosphor (e.g., ZnS:Ag and C1).

The space surrounded by the emitter section 13, the upper electrodes 14, the insulating layers 15, the focusing electrodes 16, and the transparent plate 17 (the collector electrode 18) is maintained under substantial vacuum of preferably 10² to 10⁻⁶ Pa and more preferably 10⁻³ to 10⁻⁵ Pa. In other words, the side walls (not shown) of the electron emitting apparatus 10, the transparent plate 17, and the collector electrode 18 serve as the members for defining a hermetically closed space, and this hermetically closed space is maintained under substantial vacuum. The elements (at least the upper part of the emitter section 13 and the upper electrode 14 of each element) of the electron emitting apparatus 10 are disposed inside the hermetically closed space under substantial vacuum.

As shown in Fig. 1, the electron emitting apparatus 10 further comprises a drive voltage applying circuit (drive voltage applying means or potential difference applying means) 21, a focusing electrode potential applying circuit (focusing electrode potential difference applying means) 22, and a collector voltage applying circuit (collector voltage applying means) 23.

The drive voltage applying circuit 21 includes a power supply 21s which generates a drive voltage Vin (which will be described later). The power supply 21 s is connected to the upper electrodes 14 and the lower electrodes 12. In other words, the drive voltage applying circuit 21 comprises the power supply 21 s and a circuit for connecting the power supply 21s to each of the elements. Further, the drive voltage applying circuit 21 is connected to a signal control circuit 100 and a power circuit 110. The drive voltage applying circuit 21 applies the drive voltage Vin (to the element) between the lower electrode 12 and the upper electrode 14 facing to each other, based on the signal received from the signal control circuit 100.

The focusing electrode potential applying circuit 22 is connected to the focusing electrodes 16 and constantly applies a predetermined negative potential (voltage) Vs to the focusing electrodes 16.

The collector voltage applying circuit 23 applies a predetermined voltage (collector voltage) to the collector electrode 18 and includes a resistance 23a, a switching element 23b, a constant voltage source 23c, and a switch control circuit 23d. One end of the resistance 23a is connected to the collector electrode 18. The other end of the resistance 23a is connected to a fixed connection point of the switching element 23b. The switching element 23b is a semiconductor element, such as MOS-FET, and is connected to the switch control circuit 23d.

The switching element 23b has two switching points in addition to the above-described fixed connection point. In response to the control signal from the switch control circuit 23d, the switching element 23b selectively couples the fixed connection point to one of the two switching points. One of the two switching points is grounded, and the other is connected to the anode of the constant voltage source 23c. The cathode of the constant voltage source 23c is grounded. The switch control circuit 23d is connected to the signal control circuit 100, and controls the switching operation of the switching element 23b based on the signal received from the signal control circuit 100.

### (Principle and Operation of Electron Emission)

The principle of the electron emission of the electron emitting apparatus 10 having the above-described structure will now be explained. Hereinafter, for the purpose of a brief description, the drive voltage Vin has a simple rectangular waveform different from the drive voltage Vin according to the first embodiment.

First, the state is described with reference to Fig. 6 in which the actual potential difference Vka (element voltage Vka) between the lower electrode 12 and the upper electrode 14 relative to the lower electrode 12 is maintained at a predetermined positive voltage Vp and in which all the electrons in the emitter section 13 have been emitted without remaining in the emitter section 13. At this stage, the negative pole of each of the dipoles in the emitter section 13 is oriented toward the upper surface of the emitter section 13, (i.e., oriented in the positive direction of the Z axis toward the upper electrode 14). This state is observed at a point p1 on the graph shown in Fig. 7. The graph in Fig. 7 shows the voltage-polarization characteristic of the emitter section 13 and has the abscissa indicating the element voltage Vka and the ordinate indicating the charge Q accumulated in the element 10.

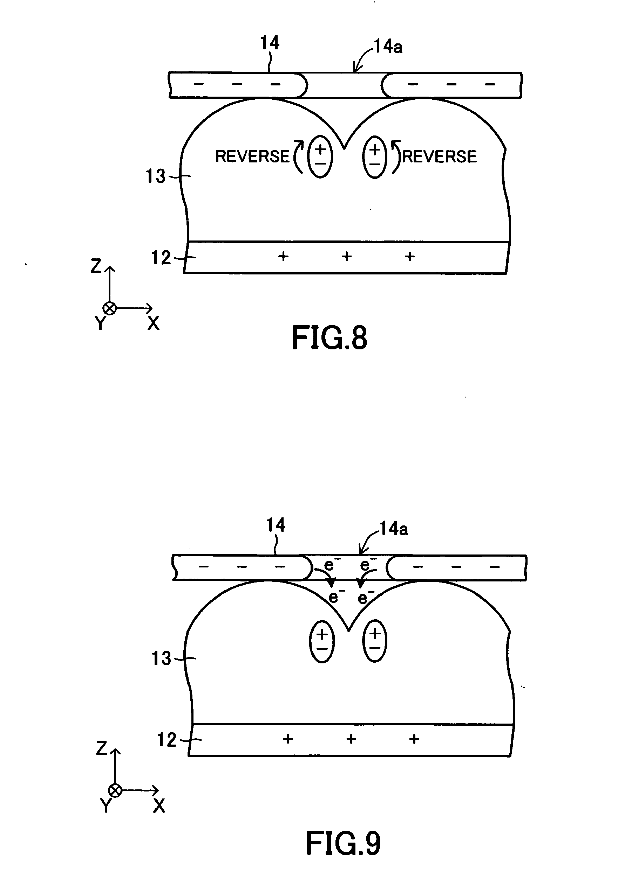

At this state, when the drive voltage Vin is set at a predetermined negative voltage Vm2 so that the element voltage Vka becomes the predetermined negative voltage Vm2, the element voltage Vka decreases toward a point p3 via a point p2 in Fig. 7. Once the element voltage Vka is decreased to near the negative coercive electric field voltage Va shown in Fig. 7, the orientation of the dipoles in the emitter section 13 starts reversing. In other words, the polarization reversal (negative-side polarization reversal) starts, as shown in Fig. 8. The polarization reversal increases the electric field in the contact sites (triple junctions) between the upper surface of the emitter section 13, the upper electrodes 14, and the ambient medium (in this embodiment, vacuum) and/or increases the electric field at the distal end portions of the upper electrodes 14 forming the micro through holes 14a. (In other words, electrical field concentration occurs at these sites). As a result, as shown in Fig. 9, the electrons are started to be supplied toward the emitter section 13 from the upper electrodes 14.

Note that the coercive electric field voltage (coercive voltage) means "a voltage determined by the material of the emitter section 13 and the thickness of the emitter section 13" at which polarization reversal occurs at the emitter section 13 (a dielectric material). That is, given a predetermined thickness of the emitter section 13, the absolute value (|Va|) of the coercive electric field voltage Va is determined by the material of the emitter section 13. According to the electron emission element used by the electron emission apparatus of the present invention, the absolute value of the positive coercive electric field voltage Vd, which will be described later, is larger than the absolute value of the negative coercive electric field voltage (the absolute value of the negative coercive electric field voltage being equal to the absolute value of the coercive electric field voltage of the emitter) because of the "eaves structure" of the upper electrode 14.

The electrons supplied as above are accumulated mainly in the upper part of the emitter section 13 near the region exposed through the micro through hole 14a and near the distal end portions of the upper electrode 14 that define the micro through hole 14a (this portion where the electrons are accumulated is hereinafter simply referred to as "the region near the micro through holes 14a of the emitter section 13"). Subsequently, the negative-side polarization reversal is completed when a predetermined time passes, and thereafter, the element voltage Vka rapidly changes toward the predetermined negative voltage Vm2. As a result, electron accumulation is completed, (i.e., a saturation state of electron accumulation is reached). This state is observed at a point p4 in Fig. 7.

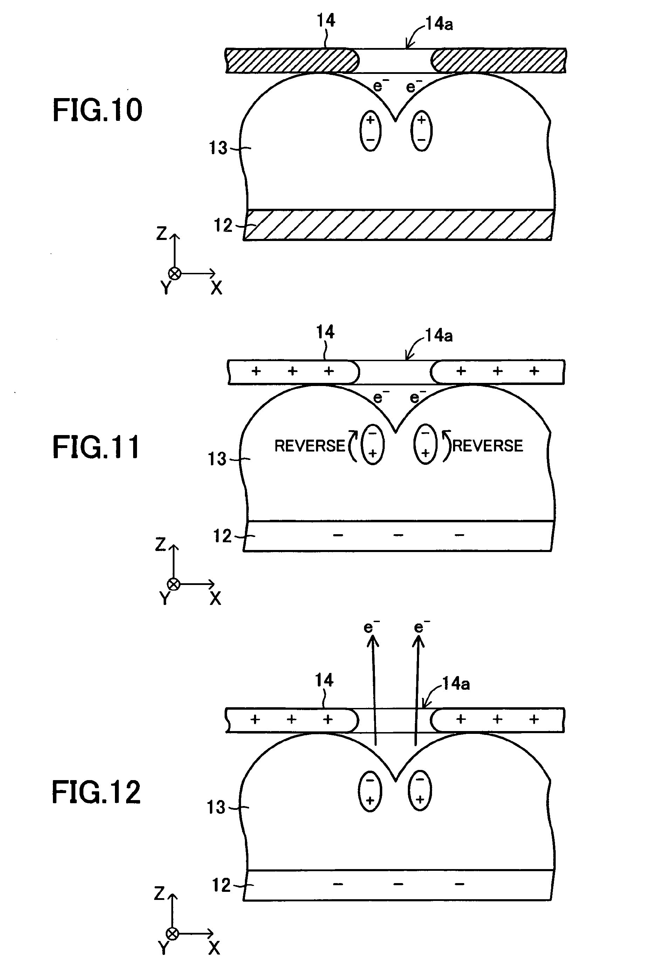

At this state, the drive voltage Vin is set at a predetermined positive voltage (second voltage) Vp2 so that the element voltage Vka becomes the predetermined positive voltage Vp2. Thus, the element voltage Vka starts to increase. Until the element voltage Vka becomes the voltage Vb (point p6) slightly smaller than the positive coercive electric field voltage Vd corresponding to a point p5 in Fig. 7, the charge state of the emitter section 13 is maintained, as shown in Fig. 10. Subsequently, the element voltage Vka reaches a value near the positive coercive electric field voltage Vd. This causes the negative poles of the dipoles to orient toward the upper surface of the emitter section 13. In other words, as shown in Fig. 11, the polarization reversal starts for the second time, (i.e., the positive-side polarization reversal is initiated). This state is observed near the point p5 in Fig. 7.

Subsequently, the positive-side polarization reversal proceeds, and thus, the number of the dipoles having negative poles oriented toward the upper surface of the emitter section 13 increases. As a result, as shown in Fig. 12, the electrons accumulated in the region near the micro through holes 14a of the emitter section 13 are started to be emitted in the upward direction (the positive direction of the Z axis) through the micro through holes 14a by Coulomb repulsion. At this time, a part of the accumulated electrons collides with the upper electrode 14, and thus, they are recaptured (recovered) by the upper electrode 14. In addition, the collision generates the secondary electron emission, and a part of the electrons generated by the secondary electron emission is emitted upward via the micro through holes 14a.

Then, the positive-side polarization reversal completes. As a consequence, the element voltage Vka starts to increase rapidly, and the element voltage Vka reaches the positive predetermined voltage Vp2 (at the state p1 in Fig. 7). During this operation, electrons are emitted continuously and then all electrons are emitted. Thereafter, the drive voltage Vin is set again at the predetermined negative voltage Vm2 so that the element voltage Vka becomes a predetermined negative voltage Vm2. Thus, the element voltage Vka reduces toward the point p3 via the point p2 shown in Fig. 7. This summarizes the principle of a series of operation including electron accumulation (light OFF state) and electron emission (light ON or emission state).

Note that, when a plurality of elements exist, the drive voltage applying circuit 21 sets the drive voltage Vin of only the upper electrodes 14 (between the upper and lower electrodes) from which electron emission is required at the predetermined negative voltage Vm2 to accumulate electrons, and maintains the drive voltage Vin of upper electrodes 14 from which no electron emission is required at "zero (0) V". Subsequently, the drive voltage applying circuit 21 simultaneously sets the drive voltage Vin of all of the upper electrodes 14 at the predetermined positive value Vp2. According to this drive voltage Vin, electrons are emitted from the upper electrodes 14 (via the micro through holes 14a) of only the elements in which electrons have been accumulated in the emitter section 13. Thus, no polarization reversal occurs in the portions of emitter section 13 near the upper electrodes 14 from which no electron emission is required.

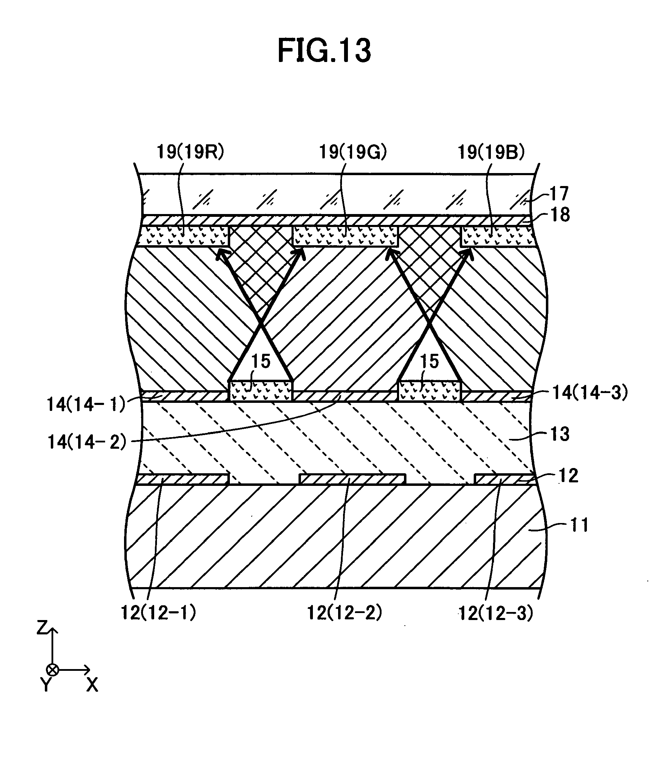

When electrons are emitted through the micro through holes 14a of the upper electrodes 14, the electrons travel in the positive direction of the Z axis by spreading (into the shape of a cone), as shown in Fig. 13. Thus, in an apparatus of the related art, electrons emitted from one upper electrode 14, e.g., the second upper electrode 14-2, reach not only the phosphor 19, e.g., the green phosphor 19G, directly above that upper electrode 14 but also the phosphors 19, e.g., the red phosphor 19R and the blue phosphor 19B, adjacent to this phosphor 19. This decreases color purity and sharpness of images.

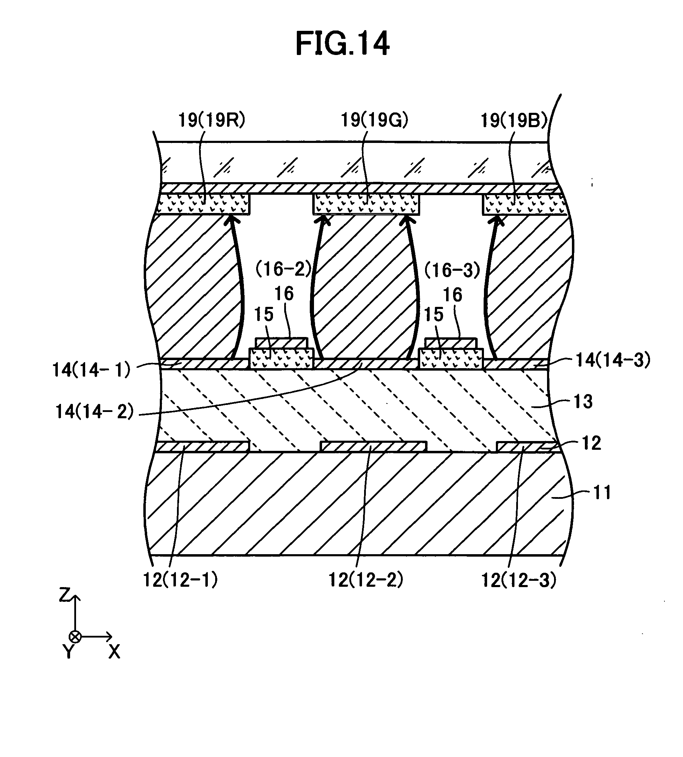

In contrast, the electron emitting apparatus 10 of this embodiment has focusing electrodes 16 to which a negative potential is applied. Each focusing electrode 16 is interposed between the adjacent upper electrodes 14 (i.e., between the upper electrodes of the adjacent elements) and is disposed at a position slightly above the upper electrodes 14. Thus, as shown in Fig. 14, the electrons emitted from the micro through holes 14a travel substantially directly upward without spreading by the electric field generated by the focusing electrode 16.

As a result, the electrons emitted from the first upper electrode 14-1 reach only the red phosphor 19R, the electrons emitted from the second upper electrode 14-2 reach only the green phosphor 19G, and the electrons emitted from the third upper electrode 14-3 reach only the blue phosphor 19B. Thus, the color purity of the display does not decrease, and sharper images can be obtained.

### (Control of Drive Voltage Vin)

Next, a description is given of the control of the drive voltage Vin by the drive voltage applying circuit 21. In the specification, an expression that the drive voltage Vin is a positive voltage means that the drive voltage Vin is a voltage which makes the potential (element voltage Vka) of the upper electrode 14 relative to the potential of the lower electrode 12 equal to the positive voltage". Therefore, an expression that the drive voltage Vin is a negative voltage means that the drive voltage Vin is a voltage which makes the element voltage Vka equal to the negative voltage".

First, the power supply 21 s of the drive voltage applying circuit 21 sets the drive voltage Vin at a predetermined negative voltage Vm2 (e.g., -70V) at a time t1, a predetermined timing, as shown in Fig. 15. Thus, the element voltage Vka alters toward the predetermined negative voltage Vm2. Therefore, the negative-side polarization reversal is caused in the emitter section 13, and electrons are supplied to the emitter section 13 from the upper electrode 14 and are accumulated in the region near the micro through holes 14a of the emitter section 13.

When the charge accumulation period Td passes from the time t1, i.e., at the time t2, the power supply 21 s of the drive voltage applying circuit 21 sets the drive voltage Vin at a predetermined positive voltage Vp1 (e.g., +200V). As a consequence, the element voltage Vka alters toward the predetermined positive voltage Vp1. The predetermined positive voltage Vp1 is higher than the above-mentioned positive coercive electric field voltage Vd, and is not less than the minimum voltage (electron emission threshold voltage Vth) for starting the electron emission when the element 10 is in the state where it holds (accumulates) the electrons. Thus, the positive-side polarization reversal starts and the electrons accumulated in the region near the micro through holes 14a are emitted via the micro through holes 14a. The predetermined positive voltage Vp1 is also referred to as the "first voltage" for the convenience sake.

When a predetermined time passes from the time t2, the first electron-emission ends. After that, at a time t3, the power supply 21s of the drive voltage applying circuit 21 sets the drive voltage Vin at the predetermined positive voltage Vp2 (e.g., +300V). The predetermined positive voltage Vp2 is higher than the predetermined positive voltage Vp1. Therefore, the element voltage Vka alters toward the voltage Vp2 which is higher than the above-mentioned electron emission threshold voltage Vth and which is higher than the first voltage Vp1. The predetermined positive voltage Vp2 is also referred to as a "second voltage" for the convenience sake.

As a consequence, during the period (first electron-emission period) from the time t2 to the time t3, the dipoles having the negative poles that have not reversed to orient toward the upper surface of the emitter section 13 (i.e. the dipoles having the negative poles that have not undergone the positive-side polarization reversal) start the positive-side polarization reversal after the time t3. Therefore, Coulomb repulsion is generated again and thereby the electrons remaining in the region near the micro through holes 14a of the emitter section 13 are emitted in the upward direction via the micron through holes 14a. In other words, just after the time t3, second electron-emission is performed. The period of the time t3 to t4 may be referred to as a second electro-emission period.

At the time t4 after a predetermined time passes (i.e., when the electron-emission period Th passes from the time t2), the power supply 21s of the drive voltage applying circuit 21 sets the drive voltage Vin at the predetermined negative voltage Vm2 again. As a consequence, the accumulation of electrons to the emitter section 13 restarts. The drive voltage applying circuit 21 (power supply 21s) thereafter repeats the operation during the time t1 to t4.

### (Control of Collector Electrode)

Next, a description is given of the control of a collector electrode by the collector voltage applying circuit 23. Within a collector voltage applying period starting from "time t2 at which the drive voltage Vin is set at the first voltage Vp1, serving as the predetermined positive voltage" to the "time just before the time t4 at which the drive voltage Vin is set at the predetermined negative voltage Vm2 to start the electron-accumulation to the emitter section 13 after the second electro-emission completes", the collector voltage applying circuit 23 applies a voltage Vc to the collector electrode 18. In other words, the collector voltage applying circuit 23 connects the fixed connection point of the switching element 23b to the anode of the constant voltage source 23c for the collector voltage applying period.

By this operation, the collector electrode 18 generates the electric field for collecting the emitted electrons. As a result, the emitted electrons via the fine through holes 14a from the emitter section 13 are accelerated (i.e., given high energy) by the electric field generated by the collector electrode 18 and travel in the upward direction from the upper electrode 14. Thus, the phosphors 19 are irradiated with electrons having high energy, and therefore, high luminance is achieved.

Further, the collector voltage applying circuit 23 applies a voltage (e.g., 0V) lower than the voltage Vc to the collector electrode 18 during the period (collector voltage non-applying period) except for the collector voltage applying period. That is, the collector voltage applying circuit 23 connects the fixed connection point of the switching element 23b to the earthed switching point during the collector voltage non-applying period. The collector voltage non-applying period matches the charge accumulation period Td.

Thus, the collector electrode 18 does not generate the electric field for attracting (collecting) the emitted electrodes or reduces the intensity of such electric field. Therefore, even if unnecessary electrons are emitted due to a large inrush current flowing through the element 10 during the charge accumulation period Td or due to an excessive large change rate in the element voltage (excessively large rate of voltage change) after the negative-side polarization reversal, the number of electrons reaching the phosphors 19 among the thus emitted electrons reduces. As a result, unnecessary light emission can be avoided.

The switching element 23b may be configured such that the earthed switching point is replaced by a floating point coupled to nowhere. In this case, the collector electrode 18 is caused to enter a floating state during the collector voltage non-applying period. The floating state of the collector electrode 18 prevents the generation of electric field for collecting the emitted electrons. Thus, by the reason similar to the above-mentioned reason, unnecessary electron emission can be avoided.

### (Examples of Drive Voltage Applying Circuit, Focusing Electrode Potential Applying Circuit, and Collector Voltage applying Circuit)

The examples and operation of the drive voltage applying circuit 21, the focusing electrode potential applying circuit 22, and the collector voltage applying circuit 23 will now be explained.

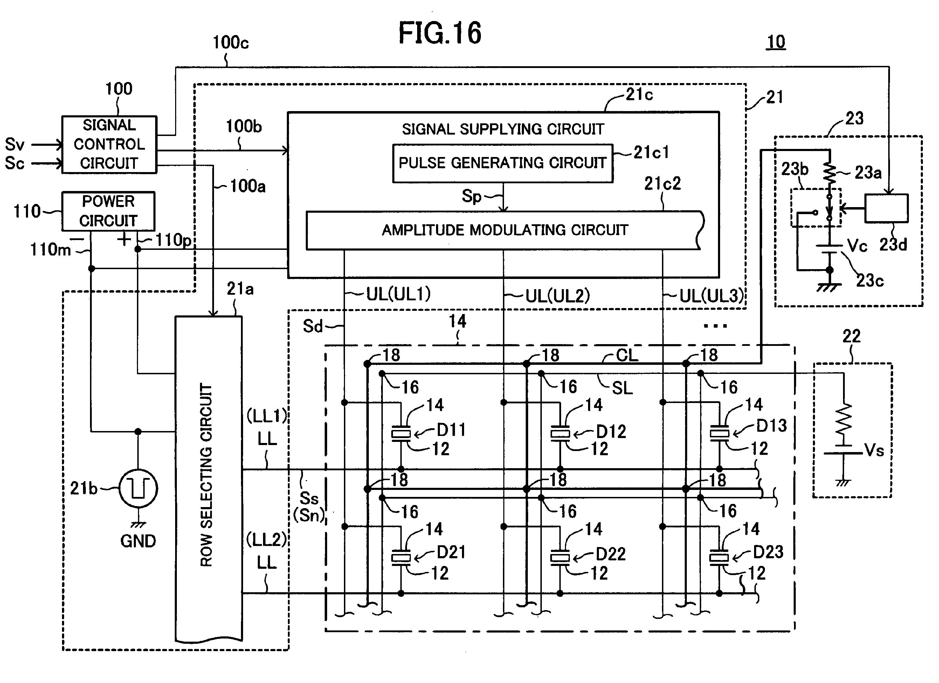

As shown in Fig. 16, the drive voltage applying circuit 21 comprises:
a row selection circuit 21 a; a pulse generator 21b; and a signal supplying circuit 21c. In Fig. 16, each of the components labeled D11, D12, ...D22, and D23 represents one element (one electron-emitting element constituted from the portion where upper electrode 14 is superimposed on the lower electrode 12 with the emitter section 13 therebetween). In this embodiment, the electron emitting apparatus 10 has a number n of elements in the row direction and a number m of elements in the column direction.

The row selection circuit 21 a is connected to a control signal line 100a of the signal control circuit 100 and a positive electrode line 110p and a negative electrode line 110m of the power circuit 110. The row selection circuit 21 a is also connected to a plurality of row selection lines LL. Each row selection line LL is connected to the lower electrodes 12 of a series of elements in the same row. For example, a row selection line LL1 is connected to the lower electrodes 12 of elements D11, D12, D13, ... and D1m in the first row, and a row selection line LL2 is connected to the lower electrodes 12 of elements D21, D22, D23, ... and D2m in the second row.

During the charge accumulation period Td in which electrons are being accumulated in the emitter section 13 of each element, the row selection circuit 21 a outputs a selection signal Ss (a 70V voltage signal in this embodiment) to one of the row selection lines LL and outputs non-selection signals Sn (a 0V voltage signal in this embodiment) to the rest of the row selection lines LL for a predetermined period (row selection period) Ts in response to the control signal from the signal control circuit 100. The row selection line LL to which the selection signal Ss is output from the row selection circuit 21 a is sequentially changed every row selection period Ts.

The pulse generator 21 b generates a reference voltage (0V in this embodiment) during a charge accumulation period Td, further generates a first fixed voltage (-250V in this embodiment) during a first electron-emission period (corresponding to the period from the time t2 to t3 in Fig. 15) which is a former half period of the light emission period (light ON period or electron emitting period) Th, and furthermore generates a second fixed voltage (-350V in this embodiment) during the second electron-emission period (corresponding to the period from the time t3 to t4 in Fig. 15), which is a latter half period of the light emission period Th. The pulse generator 21 b is coupled between the negative electrode line 110m of the power circuit 110 and the ground (GND).

The signal supplying circuit 21c is connected to the a control signal line 100b of the signal control circuit 100 and the positive electrode line 110p and the negative electrode line 110m of the power circuit 110. The signal supplying circuit 21 c has a pulse generating circuit 21c1 and an amplitude modulator circuit 21 c2 inside.

The pulse generating circuit 21 c1 outputs a pulse signal Sp having a predetermined amplitude (70V in this embodiment) with a predetermined pulse period during the charge accumulation period Td, and outputs a reference voltage (0V in this embodiment) during the emission period Th.

The amplitude modulator circuit 21 c2 is connected to the pulse generating circuit 21c1 so as to receive the pulse signal Sp from the pulse generating circuit 21 c1. Further, the amplitude modulator circuit 21 c2 is connected to a plurality of pixel signal lines UL. Each of the pixel signal lines UL is connected the upper electrodes 14 of a series of elements in the same column. For example, a pixel signal line UL1 is connected to the upper electrodes 14 of the elements D11, D21, ... and Dn1 of the first column, a pixel signal line UL2 is connected to the upper electrodes 14 of the elements D12, D22, ... and Dn2 of the second column, and a pixel signal line UL3 is connected to the upper electrodes 14 of the elements D13, D23, ... and Dn3 of the third column.

During the charge accumulation period Td, the amplitude modulator circuit 21c2 modulates the amplitude of the pulse signal Sp according to the luminance levels of the pixels in the selected row, and outputs the modulated signal (a voltage signal of 0V, 35V, or 70V in this embodiment), which serves as a pixel signal Sd, to the pixel signal lines UL (UL1, UL2, ... and ULm). During the emission period Th, the amplitude modulator circuit 21c2 outputs, without any modulation, the reference voltage (0V) generated by the pulse generating circuit 21c1.

The signal control circuit 100 receives a video signal Sv and a sync signal Sc and outputs a signal for controlling the row selection circuit 21 a to the signal line 100a, a signal for controlling the signal supplying circuit 21 c to the signal line 100b, and a signal for controlling the collector voltage applying circuit 23 to a signal line 100c based on these received signals.

The power circuit 110 outputs voltage signals to the positive electrode line 110p and the negative electrode line 110m so that the potential of the positive electrode line 110p is higher than the potential of the negative electrode line 110m by a predetermined voltage (50V in this embodiment).

The focusing electrode potential applying circuit 22 is coupled to a connecting line SL that connects all of the focusing electrodes 16. The focusing electrode potential applying circuit 22 applies to the connecting line SL a potential Vs with respect to the ground.

The collector voltage applying circuit 23 is connected to an interconnection line CL coupled to the collector electrode 18 and the signal line 100c from the signal control circuit 100. The collector voltage applying circuit 23 alternately applies the positive first voltage Vc (= first collector voltage V1) and the second voltage (second collector voltage V2 which is equal to the ground voltage, 0V, in this embodiment) smaller than the first voltage Vc to the interconnection line CL based on the signal received from the signal control circuit 100.

The operation of the circuit having the above-described structure will now be described. At the beginning of the charge accumulation period Td starting at a particular time, the row selection circuit 21 a outputs a selection signal Ss (70V) to the row selection line LL1 of the first row based on the control signal from the signal control circuit 100 and outputs non-selection signals Sn (0V) to the rest of the row selection lines LL.

As a result, the potential of the lower electrodes 12 of the elements D11, D12, D13, ... and D1m in the first row becomes the voltage (70V) of the selection signal Ss. The potential of the lower electrodes 12 of the other elements (for example, the elements D21, D22, ...and D2m in the second row and the elements D31, D32, ...and D3m in the third row) becomes the voltage (0V) of the non-selection signal Sn.

At this time, the signal supplying circuit 21 c outputs pixel signals Sd (0V, 35V, or 70V in this embodiment) to the pixel signal lines UL (UL1, UL2, ... and ULm) based on the control signal from the signal control circuit 100, the pixel signals Sd corresponding to the luminance level of the respective pixels constituted from the elements of the selected row, i.e., in this case, the elements D11, D12, D13, ... and D1m in the first row. The potential difference between the pixel signal Sd and the selection signal Ss becomes the drive signal Vin.

For example, assuming that a 0V pixel signal Sd is supplied to the pixel signal line UL1, the element voltage Vka (D11) which is the potential difference between the upper electrode 14 and the lower electrode 12 of the element D11 reaches finally the aforementioned negative predetermined voltage Vm, i.e., -70V (= 0V - 70V, a first predetermined negative voltage). Accordingly, a large number of electrons are accumulated in the emitter section 13 in the region near the micro through holes 14a of the element D11. Assuming that a 35V pixel signal Sd is supplied to the pixel signal line UL2, the element voltage Vka (D12) becomes the aforementioned negative predetermined voltage Vm, i.e., -35V (= 35V - 70V, a second predetermined negative voltage). As a result, fewer electrons are accumulated in the region near the micro through holes 14a of the emitter section 13 in the element D12 than in the element D11.

Further, assuming that a 70V pixel signal Sd is supplied to the pixel signal line UL3, the element voltage Vka(D13) of the element D13 is 0V (= 70V - 70V). Thus, no polarization reversal occurs in the emitter section 13 of the element D13. That is, no electron is accumulated in the emitter section 13 of the element D13.

Once the row selection period Ts (which is long enough to accumulate electrons to the selected element) has elapsed, the row selection circuit 21 a outputs a selection signal Ss (70V) to the row selection line LL2 of the second row based on the control signal from the signal control circuit 100 and outputs non-selection signals Sn (0V) to the rest of the row selection lines. By this operation, the potential of the lower electrodes 12 of the elements D21, D22, D23, ... and D2m in the second row becomes the voltage (70V) of the selection signal Ss. The potential of the lower electrodes 12 of the rest of the elements (e.g., the elements D11 to D1m in the first row and the elements D31 to D3m in the third row) becomes the voltage (0V) of the non-selection signals Sn.

At this time, the signal supplying circuit 21 c outputs pixel signals Sd (voltage signal of any of 0V, 35V, and 70V in this embodiment) to the plurality of pixel signal lines UL (UL1, UL2, and ULm) based on the control signal from the signal control circuit 100, the pixel signals Sd corresponding to the luminance level of the respective pixels constituted from the elements of the selected row, i.e., in this case, the elements D21, D22, D23, ... and D2m in the second row. As a result, electrons are accumulated in the emitter sections of the elements D21, D22, D23, ... and D2m in the second row, in amounts corresponding to the pixel signals Sd.

Note that the element voltage Vka of the element to which the 0V non-selection signal Sn is supplied is 0V (in this case, 0V potential of the upper electrode and 0V potential of the lower electrode), 35V (in this case, 35V potential of the upper electrode and 0V potential of the lower electrode), or 70V (in this case, 70V potential of the upper electrode and the 0V potential of the lower electro). However, these levels of voltage are not sufficient for (the positive) polarization reversal in each of the elements in which the electrons have already been accumulated. That is, the element voltage Vka does not exceed the electron-emission threshold voltage Vth.

Further, when the row selection time Ts has elapsed, the row selection circuit 21 a outputs the selection signal Ss (70V) to the row selection line LL3 (not shown) of the third row and outputs the non-selection signals Sn (0V) to the rest of the row selection lines. Meanwhile, the signal supplying circuit 21c outputs pixel signals Sd corresponding to the luminance levels of the respective pixels constituted from the elements in the selected third row to the plurality of pixel signal lines UL. Such an operation is repeated every row selection time Ts until all of the rows are selected. As a result, at a predetermined time point, electrons are accumulated in the emitter sections of all the elements in amounts (including "zero") corresponding to the luminance levels of the respective elements. This summarizes the operation that takes place during the charge accumulation period Td.

In order to start the emission period Th (more concretely, first electron-emission period), the row selection circuit 21 a applies a large negative voltage (in this embodiment, the applied voltage is -200V, i.e., the difference between +50V generated by the power circuit 110 and -250V generated by the pulse generator 21 b) to all of the row selection lines LL. Meanwhile, the signal supplying circuit 21 c outputs the reference voltage (0V), which is generated by the pulse generating circuit 21c1, through the amplitude modulator circuit 21c2 without modulation to all of the pixel signal lines UL. As a result, the potential of the upper electrodes 14 of all the elements becomes the reference voltage (0V).

Thus, the drive voltage Vin applied to all the elements is set at the first voltage Vp1 (= 200V). Therefore, the positive-side polarization reversal is caused in each of the emitter sections 13 of the elements and the electrons accumulated in each of the emitter sections 13 of the elements are partly emitted concurrently by Coulomb repulsion. This causes the phosphors disposed above the elements to emit light and to thereby display images. Note that in the emitter section of the elements, to which a zero voltage Vin between the upper and the lower electrodes was applied during the charge accumulation period Td, and therefore, which have not accumulated electrons, no negative-side polarization reversal has occurred. Thus, no positive-side polarization reversal occurs even when the voltage Vin between the upper and lower electrodes is set at the large positive voltage. Accordingly, for example, the element that is not required to emit light for the purpose of producing a particular image at a particular timing does not consume excess energy that accompanies the polarization reversal.

After the first electron-emission period, the row selection circuit 21 a applies a large negative voltage (in this embodiment, -300V, which is a difference between +50V generated by the power circuit 110 and -350V generated by the pulse generator 21 b) to all the row selection lines LL. The signal supplying circuit 21c outputs the reference voltage (0V) generated by the pulse generating circuit 21c1 via the amplitude modulator circuit 21 c2 without modulation to all the pixel signal lines UL. As a consequence, the potential of the upper electrodes 14 of all the elements becomes the reference voltage (0V).

Thus, the drive voltage Vin applied to all the elements is set at the second voltage Vp2 (= 300V). Therefore, the dipoles, that have not undergone (completed) the positive-side polarization reversals during the first electron-emission period, undergo the positive-side polarization reversals. Thus, the rest of electrons in the emitter section 13 are emitted concurrently by Coulomb repulsion. This causes the phosphors disposed above the elements to emit light and to thereby display images.

As described above, during the charge accumulation period Td, the drive voltage applying circuit 21 consecutively (sequentially) sets the drive voltage Vin for the plurality of elements at the predetermined negative voltage one after next. Upon completion of electron accumulation in all the elements, the drive voltage applying circuit 21 simultaneously sets the drive voltage Vin for all the elements at the first voltage Vp1, which is the predetermined positive voltage to cause concurrent electron emission from all of the elements, and subsequently, at the second voltage Vp2, which is the predetermined positive voltage to cause concurrent electron emission from all of the elements. After the predetermined emission period Th has elapsed, the drive voltage applying circuit 21 again starts the charge accumulation period Td.

As explained above, the electron emitting apparatus 10 according to the first embodiment of the present invention comprises the drive voltage applying circuit 21 which applies between the lower electrode 12 and the upper electrode 14 the drive voltage Vin to cause the element voltage Vka, which is the potential of the upper electrode 14 relative to (or with respect to) the potential of the lower electrode 12, to reach the negative voltage Vm2 (Vm) and thereafter to reach the positive voltage. Further, the drive voltage applying circuit 21 is configured as to stepwise increase the positive voltage (to the first voltage Vp1 during the first electron-emission period and to the second voltage Vp2 larger than the first voltage Vp1 during the second electron-emission period).

Thus, upon causing the element voltage Vka to be at the negative voltage, the electrons are accumulated to the emitter section. Then, the accumulated electrons are emitted every stepwise increase in the element voltage Vka.

In other words, the electrons accumulated in the emitter section 13 per one electron-accumulation (during the each electron-accumulation period Td) are emitted at a plurality of times via the micro through holes 14a of the upper electrode 14. Thus, even if the absolute value of the negative voltage applied to the element voltage Vka during the electron accumulation period Td is large and a large number of electrons are accumulated in the emitter section, the amount of electrons emitted by each one operation of the electron-emission is smaller than that of the conventional case. As a result, since large inrush current does not flow through the electron emitting apparatus 10, the deterioration of the element due to the heating is avoided and the total amount of emitted electrons (electron emission total amount) during the predetermined period T increases. Further, the dipoles in the emitter section 13 rotate only once (i.e. reverses twice) during the period from one electron accumulation operation to completion of emitting electrons accumulated in the one electron accumulation (during the predetermined period T). Therefore, since the number of polarization reversal does not increase, the deterioration of the elements is suppressed.

In addition, in general, if and when an excessively large amount of electrons collide with the phosphor 19 , the part of energy of the electrons changes to the heat and thus the amount of emission light from the phosphor is not increased. On the other hand, after ending the collision of electrons, the phosphor 19 still emits light (remaining light) whose amount decreases in accordance with the time elapse. Thus, the phosphor 19 can emit light with high efficiency, if electrons whose amount is proper in that a part of energy of the electrons does not change to the heat are caused to collide with the phosphor 19, and then the collision of electrons is stopped, and then the electrons are caused to collide with the phosphor 19 again at the proper timing when an amount of light (remaining light, persistent light) becomes small.

Therefore, as the electron-emitting apparatus according to the first embodiment, a large amount of emission light is generated with small power-consumption by repeating the electron emission for a short period a plurality of times and causing the emitted electrons to collide with the phosphor, while suppressing an amount of emitted electrons for each of the electron emissions. That is, a large part of energy of the electrons does not change to the heat and the remaining light of the phosphor can be utilized. As a result, it is possible to provide a display device showing a clear image or a light-emitting device capable of emitting a large amount of light.

Further, in the first embodiment, the predetermined potential (Vs) is applied to the focusing electrodes. Therefore, the electrons emitted from each of the upper electrodes 14 of the elements are irradiated only to the phosphor existing on the direct upper portion of the upper electrode 14. As a consequence, clear image is provided.

Moreover, the collector voltage applying circuit 23 applies the voltage Vc to the collector electrode 18 during the collector voltage applying period, and further applies the voltage (e.g., 0V) smaller than the voltage Vc to the collector electrode 18 during the collector voltage non-applying period. Thus, during the electron emission period Th, the electric field generated by the collector electrode allows the electrons emitted via the micro through holes 14a of the upper electrode 14 from the emitter section 13 to collide with the phosphor 19 certainly. Further, the electric field generated by the collector electrode accelerates the electrons by applying the energy to the emitted electrons, thereby increasing the amount of emission light of the phosphor 19. In addition, only the electrons emitted during the electron emission period Th are certainly led toward the phosphor 19 and it can be avoided that the electrons emitted during the electron accumulation period Td reach the phosphor 19.

### (Second embodiment)

An electron-emitting apparatus according to a second embodiment of the present invention will now be described. The electron-emitting apparatus according to the second embodiment is different from the electron-emitting apparatus 10 according to the first embodiment only in that the apparatus according to the second embodiment alters the drive voltage Vin differently from the drive voltage Vin in the electron-emitting apparatus 10 according to the first embodiment. Therefore, the different point is mainly described hereinafter.

Similarly to the drive voltage applying circuit 21 according to the first embodiment, as shown in Fig. 17(A), the drive voltage applying circuit 21 according to the second embodiment applies, between the lower electrode 12 and the upper electrode 14 (to inter-electrodes), the drive voltage Vin for setting the element voltage Vka at the negative voltage Vm2 during the electron accumulation period Td starting from the time t1. Thus, the electrons are accumulated in the region near the micro through holes 14a of the emitter section 13.

Further, at the time t2 when the electron accumulation period Td passes, the drive voltage applying circuit 21 according to the second embodiment applies to the inter-electrodes the drive voltage Vin (i.e., first predetermined voltage Vp1) which sets the element voltage Vka at the predetermined positive voltage (first voltage) Vp1. Thus, the positive-side polarization reversal is caused and the first electron-emission occurs.

At a time t21 at which the first electron-emission is completed when a predetermined time (first electron-emission period) elapses from the time t2, the drive voltage applying circuit 21 applies the drive voltage Vin (i.e., third voltage Vp3) to the inter-electrodes to cause the element voltage Vka to become the third voltage Vp3. The third voltage Vp3 is a voltage which is smaller than the first voltage Vp1 and which does not cause the element to accumulate electrons in the emitter section 13.

Just before the end of the first electron-emission period (time t21), a large part of dipoles designed to undergo the positive-side polarization reversal by setting the element voltage Vka at the first voltage Vp1 actually have completed the positive-side polarization reversal. However, a part of such dipoles have not undergone the positive-side polarization reversal or are just undergoing the reversal.

Therefore, if the element voltage Vka is promptly changed to a voltage larger than the first voltage Vp1 at the time t21 or at the time t3 just after the time t21, next electron-emission (second electron-emission) may start without the interrupt (halt) of electron emission. Such continuous electron-emission is not preferable for a device (e.g., a display device) which requires the electron emission at a predetermined timing only.

On the contrary, the drive voltage applying circuit 21 according to the second embodiment temporarily stops the polarization reversal so as to completely stop the electron emission by temporarily keeping the element voltage Vka to the third voltage Vp3, without increasing immediately the element voltage Vka just after the first electron-emission period. That is, as shown in a graph of the characteristics between the voltage and the polarization of the emitter section 13 in Fig. 17(B), the drive voltage applying circuit 21 changes the element state from a point p7 to a point p8. As will be understood with reference to the graph, there is no difference between the amount of charges (amount of electrons) kept by the emitter section 13 at the point p7 and the amount of charges (amount of electrons) kept by the emitter section 13 at the point p8. In other words, even if the element state changes from the point p7 to the point p8, the electrons are kept unchanged in the emitter section 13 and are not emitted.

Thereafter, at the time t3 when a short time elapses from the time t21, the drive voltage applying circuit 21 then applies to the inter-electrodes the drive voltage Vin (i.e., second voltage Vp2) for setting the element voltage Vka at the second voltage Vp2 larger than the first voltage Vp1. As a result, the dipoles that have not completed the positive-side polarization reversal start the positive-side polarization, and thus, the electrons remaining in the region near the micro through holes 14a of the emitter section 13 begins to be emitted. In other words, the second electron-emission is performed.

As explained above, in the electron-emitting apparatus according to the second embodiment, the drive voltage applying circuit 21 is configured to temporarily set the element voltage Vka at the voltage (the third voltage) Vp3 which is smaller than the first voltage Vp1 and which does not cause the element 10 to accumulate the electrons in the emitter section 13, upon increasing the potential (the element voltage Vka) of the upper electrode 14 with respect to the potential of the lower electrode 12 from the first voltage Vp1 as the positive voltage to the second voltage Vp2 larger than the first voltage Vp1 for the purpose of electron emission.

In other words, an apparatus according to the second embodiment comprises drive voltage applying means (circuit) 21 for applying a drive voltage Vin between the lower electrode and the upper electrode (the inter-electrodes) in such a manner that the drive voltage Vin causes the element voltage Vka to reach the negative voltage Vm2 in order that electrons are accumulated in the emitter section 13, and then causes the element voltage Vka to reach the positive voltage in order that the accumulated electrons are emitted.

The drive voltage applying circuit 21 is configured to apply, as the drive voltage Vin for causing the element voltage Vka to reach the positive voltage between the lower electrode and the upper electrode, a voltage which includes a plurality of pulses (pulse waveforms) generated intermittently, each of the pulses whose maximum value being not less than the maximum value of the immediately preceding pulse so that the maximum values of the pulses are on the increase (e.g., the drive voltage Vin of the time period t2~t21 and t3~t4 in Fig. 17), and the voltage becomes levels to keep the element voltage Vka at which no electron accumulation in the emitter section is caused during each interval between successive pulses (the time period t21~t3).

With the configuration above, electrons are emitted at a certain timing within a period during which a pulse is applied (i.e., at the timing at which positive polarization reversal starts due to the increase in the element voltage Vka). Further to that, it is possible to certainly provide a period Tp3 (time t21~t3) during which the electron-emission is prevented between two successive electron-emission periods (the interval between successive two pulses). As a consequence, the electrons can be emitted at the timing corresponding to the requirements of a display to which the electron-emitting apparatus is applied. That is, it is possible that the frequency for electron emission substantially increases.

Furthermore, with the drive voltage changed in this way, it is possible to reduce power consumption in the element by the amount corresponding to the area defined by a curve connecting the point p7, the point p8, and the point p1 of Fig. 17(B).

### (Third embodiment)

Next, an electron-emitting apparatus according to the third embodiment of the present invention will be described. The electron-emitting apparatus according to the third embodiment is different from the electron-emitting apparatus 10 according to the first embodiment only in that the apparatus according to the third embodiment alters the drive voltage Vin differently from the drive voltage Vin in the electron-emitting apparatus 10 according to the first embodiment. Therefore, the different point is mainly described hereinafter.

Referring to Fig. 18, similarly to the drive voltage applying circuit 21 according to the first embodiment, the drive voltage applying circuit 21 according to the third embodiment applies between the lower electrode 12 and the upper electrode 14 (to the inter-electrodes) the drive voltage Vin for setting the element voltage Vka to the negative voltage Vm2 during the electron accumulation period Td starting from the time t1. Thus, the electrons are accumulated in the region near the micro through holes 14a of the emitter section 13.

Further, at the time t2 when the electron accumulation period Td elapses, the drive voltage applying circuit 21 according to the third embodiment increases the drive voltage Vin (i.e., element voltage Vka) gradually and stepwise every predetermined time. Specifically, at the time t2 when the electron accumulation period Td elapses, the drive voltage applying circuit 21 makes the drive voltage Vin to keep a fourth voltage Vp4 which is the positive voltage for a predetermined period, and subsequently makes the drive voltage Vin to keep a fifth voltage Vp5 (Vp1>Vp5>Vp4) which is the positive voltage for a predetermined period. In this case, the fourth voltage Vp4 and the fifth voltage Vp5 are selected to be values by which the positive-side polarization reversal is not caused, i.e., voltages smaller than the electron emission threshold voltage Vth (thus, the voltage being smaller the positive coercive electric field voltage Vd). Therefore, when the element voltage Vka becomes the fourth voltage Vp4 and the fifth voltage Vp5, the electrons are not emitted. Thereafter, the drive voltage applying circuit 21 sets the drive voltage Vin at the first voltage Vp1 throughout the first period, and subsequently sets the drive voltage Vin at the second voltage Vp2 throughout the second period. Thus, the first electron-emission is performed within the first period and the second electron-emission is performed within the second period.

As mentioned above, the electron-emitting apparatus according to the third embodiment applies the drive voltage Vin to the inter-electrodes so as to stepwise increase the element voltage Vka before the element voltage Vka reaches the voltage necessary for starting the electron emission after the electron accumulation.

Thus, similarly to the first and second embodiments, the electrons which are accumulated once are emitted separately at a plurality of times, and therefore the total amount of emitted electrons can be increased without reducing the lifetime of the element 10. Further, although the drive voltage Vin stepwise but gradually increases. Thus, the element voltage Vka follows the drive voltage Vin. Therefore, the polarization reversal and the electron emission occur when the difference between the drive voltage Vin and the element voltage Vka is small. As a consequence, the power consumption (Joule heat) at the resistance of the element, the resistance near the element and the circuit resistance is reduced.

Thus, since the element is not heated, the change in characteristics of the emitter section 13 due to the heat is avoided. Further, since the element temperature is not high, the generation of gas consisting of materials absorbed to the element is avoided. As a result, the generation of plasma is prevented and therefore the excessive emission of electrons (generation of large light-emission) and the damage on the element due to the ion bombardment are avoided.

### (Fourth embodiment)

Next, a description is given of an electron-emitting apparatus according to a fourth embodiment of the present invention. The electron-emitting apparatus according to the fourth embodiment is different from the electron-emitting apparatus 10 according to the first embodiment,
in that the drive voltage Vin is changed differently from the drive voltage Vin is changed in the electron-emitting apparatus 10. Therefore, the different point is mainly described hereinafter.

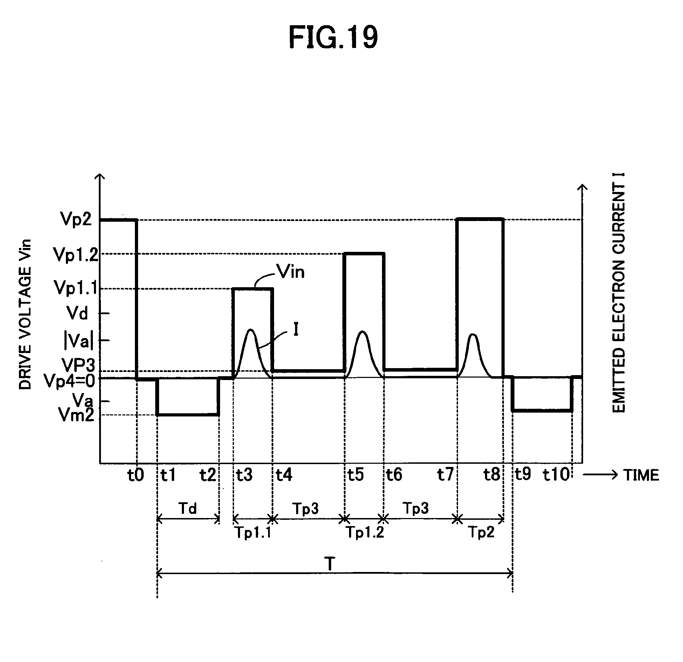

Similarly to the drive voltage applying circuit 21 according to the first embodiment, the drive voltage applying circuit 21 according to the fourth embodiment applies the drive voltage Vin, for setting the element voltage Vka at the negative voltage Vm2 during the electron accumulation period Td from the time t1 to t2, between the upper and lower electrodes, as shown in Fig. 19. Thus, electrons are accumulated in the region near the micro through holes 14a of the emitter section 13.

Further, the drive voltage applying circuit 21 according to the fourth embodiment applies the drive voltage Vin (i.e., fourth voltage Vp4) for setting the element voltage Vka at the fourth voltage Vp4 (in the example, Vp4=0) between the upper and lower electrodes during the period from the time t2 to the time t3. That is, the drive voltage applying circuit 21 sets the drive voltage Vin at the fourth voltage Vp4. The fourth voltage Vp4 is a value at which the positive-side polarization reversal is not caused, i.e., a value smaller than the electron emission threshold voltage Vth, preferably, a voltage having the level smaller than the coercive electric field voltage Va.

Subsequently, the drive voltage applying circuit 21 sets the drive voltage Vin at a first lower voltage Vp1.1 during a period (first electron-emission period Tp1.1) from the time t3 to t4. The first lower voltage Vp1.1 is larger than the positive coercive electric field voltage Vd, and is not less than the electron emission threshold voltage Vth. Consequently, as shown by emission electron current I in Fig. 19, electrons are emitted during a period from the time immediately after the time t3 to the time t4.

Then, the drive voltage applying circuit 21 applies the drive voltage Vin (i.e., third voltage Vp3) for setting the element voltage Vka at a third voltage Vp3 during a period from the time t4 to t5 (third-voltage-setting period Tp3, i.e., electron holding period Tp3) between the upper and lower electrodes. The third voltage Vp3 is a voltage which is smaller than the first lower voltage Vp1.1 and which prevents the operation for accumulating electrons to the emitter section 13 by the electron-emitting apparatus 10. The third-voltage-setting period Tp3 is set to be a period longer than the first electron-emission period Tp1.1.

Subsequently, the drive voltage applying circuit 21 sets the drive voltage Vin at a first higher voltage Vp1.2 for a period (second electron-emission period Tp1.2) from the time t5 to t6. The first higher voltage Vp1.2 is larger than the first lower voltage Vp1.1. Therefore, the first higher voltage Vp1.2 is larger than the positive coercive electric field voltage Vd and is larger than the electron emission threshold voltage Vth. As a result, since the dipoles, which have not yet completed the positive-side polarization reversal, start the positive-side polarization reversal, the electrons remaining in the region near the micro through hole 14a of the emitter section 13 are emitted via the micro through hole 14a. That is, the electrons are emitted again during a period from the time immediately after time t5 to the time t6.

The drive voltage applying circuit 21 applies the drive voltage Vin for setting again the element voltage Vka at the third voltage Vp3 between the upper and lower electrodes during a period from the time t6 to t7 (third-voltage-setting period Tp3, i.e., electron holding period Tp3). The third-voltage-setting period Tp3 is set to be a period longer than the second electron-emission period Tp1.2.

Further, the drive voltage applying circuit 21 sets the drive voltage Vin at the second voltage Vp2 for a period (third electron-emission period Tp2) from the time t7 to t8. The second voltage Vp2 is larger than the first higher voltage Vp1.2. Consequently, since the dipoles, which have not yet completed the positive-side polarization reversal, start the positive-side polarization reversal, the electrons remaining in the region near the micro through holes 14a of the emitter section 13 are emitted via the micro through holes 14a. That is, the third electron-emission is performed.

Thereafter, the drive voltage applying circuit 21 sets the drive voltage Vin at a sixth voltage Vp6 (in the example, Vp6=0) during a period from the time t8 to t9. The sixth voltage Vp6 is a voltage between the positive coercive electric field voltage Vd and the negative coercive electric field voltage Va.

At the time t9, similarly to the time t1, the drive voltage applying circuit 21 sets the drive voltage Vin at the negative voltage Vm2. Thus, the operation during the electron accumulation period Td restarts. In other words, the period from the time t1 to the time t9 corresponds to one period T of accumulation and emission of electrons.

It should be noted that, preferably, the third electron-emission period Tp2 is set to a period longer than the first electron-emission period Tp1.1 and the second electron-emission period Tp1.2. In other words, preferably, among a plurality of voltage pulses (voltage having a pulse waveform) for emitting electrons that are generated in a period from "the time point (time t2) at which the electron accumulation period Td starting from the time t1 shown in Fig. 19 has elapsed" to "the time point (time t9) at which the next electron-accumulation operation starts (time point for restarting the electron accumulation operation)", a voltage pulse which is generated just before the time t9 which is the time point for restarting the electron accumulation operation (this voltage pulse is referred to as "voltage pulse finally generated" or "final voltage-pulse") has a pulse width (pulse duration) which is the widest in the plurality of voltage pulses generated during the period from the time t2 to the time t9. That is, it is preferable that relationships of TP2>Tp1.1 and TP2>Tp1.2 be established.

Such a voltage pulse (the final voltage-pulse) generated just before the restart time (time t9) of the electron accumulation operation can stabilize the status of the polarization of the emitter section, which is disturbed by applying voltage pulses plural times.

Further, if the pulse width (Tp1.1 and/or Tp1.2) of the voltage pulse generated before the final voltage-pulse is longer, the leakage of electrons to the upper electrode 14 may occur. As a result, the total amount of emission electrons may be reduced. On the other hand, the final voltage-pulse is to be a pulse for emitting all the electrons accumulated in the emitter section. In other words, there is no voltage pulse generated for electron emission after the final voltage-pulse without providing the period (time t9 to t10) for accumulating the electrons. Therefore, even if the leakage of electrons to the upper electrode 14 occurs by elongating the pulse width Tp2 of the final voltage-pulse, the leakage does not influence on the electron emission after the final voltage-pulse.

Note that the above-mentioned technique in which the final voltage-pulse width is set maximum among the pulse widths of the plural voltage pulses generated during the period (time t3 to t8) of the one-time electron-emission operation can be applied to the other embodiments of the present invention.

As mentioned above, according to the fourth embodiment, the electron-emitting apparatus comprises the drive voltage applying means (circuit) 21 for applying the drive voltage Vin between the lower electrode and the upper electrode, wherein the voltage Vin is for enabling the element voltage Vka to reach the negative voltage Vm2 so as to accumulate electrons in the emitter section 13 of the element, and thereafter for enabling the element voltage Vka to reach the positive voltage so as to emit the accumulated electrons.

The drive voltage applying circuit 21 applies, between the upper and lower electrodes, as the drive voltage Vin for enabling the element voltage Vka to reach the positive voltage, a voltage (the drive voltage Vin during the period of the time t3 to t4, time t5 to t6, and time t7 to t8) which has a plurality of pulse waveforms intermittently generated. The maximum values of the pulse waveforms (peak values of voltage pulses) increase while each of the maximum values has a value not less the maximum value of the just-before pulse waveform (i.e., the peak value of the voltage pulse generated just previously). The voltage applied by the drive voltage applying circuit 21 includes a voltage level for making the element voltage Vka be a voltage Vp3 which prevents the electron accumulation to the emitter section 13 during the period of continuous pulse waveforms (time t4 to t5 and time t6 and t7).

Thus, at a predetermined timing within a period during which the voltage (voltage pulse) of pulse waveform is applied (i.e., at a starting timing of the positive-side polarization reversal as a result of increasing the element voltage Vka), electrons start to be emitted. Further, it is possible to certainly provide the period Tp3 which prevents the electron emission during the successive two-time electron emission (during the two successive voltage pulses). As a consequence, it is possible to emit electrons at the timing in response to the request of a display to which the electron-emitting apparatus is applied. That is, it is possible to substantially increase the frequency for emitting electrons.

Further, by altering the drive voltage as mentioned above, it is possible to reduce power consumption in the element by the amount corresponding to the area surrounded by the curve connecting the points p7, p8, and p1 shown in Fig. 17(B).

When the level (the absolute values) of the voltage Vp3 is smaller than the positive coercive electric field voltage Vd, the emission of electrons are not caused, and electrons are kept in the emitter section. However, actually, the voltage larger than the coercive electric field voltage (|Va|) of the emitter section 13 is continuously applied between the upper and lower electrodes, the electrons may move on the surface of the emitter section 13, so that the electrons can be leaked to the portions of the upper electrode 14 which are in contact with the emitter section 13. As a result, the amount of accumulated electrons may be reduced.

Thus, it is preferable that the level of the voltage Vp3 be set at a level smaller than the level (|Va|) of the coercive electric field voltage of the emitter section 13.

If the voltage Vp3 is set as mentioned above (if the level of the voltage Vp3 is set at a level smaller than the level (|Va|)), the above-mentioned leakage of electrons to the upper electrode 14 is avoided, and no polarization reversal in the emitter section 13 occurs. Thus, the electrons accumulated in the emitter section 13 can be certainly kept in the emitter section 13.

Further, preferably, the level of the voltage Vp3 is 1/4 or less of the coercive electric field voltage (|Va|) of the emitter section 13. More preferably, the level of the voltage Vp3 is 1 /10 or less of the coercive electric field voltage (|Va|) of the emitter section 13. Most preferably, the level of the voltage Vp3 is 0V. As the level of the voltage Vp3 is smaller, the area surrounded by the curve connecting the points p7, p8, and p1 shown in Fig. 17(B) is larger. Therefore, the power consumed in the element can be reduced by a larger amount.

In order to set the voltage Vp3 to be 0V, the upper electrode 14 and the lower electrode 12 may be short-circuited. The short-circuit operation includes the connection between the upper electrode 14 and the lower electrode 12 via a lead or a resistor having a resistance having a predetermined level. When the voltage Vp3 is set to be 0V as above, a power supply circuit (i.e., a power supply for voltage Vp3) for generating a predetermined voltage other than 0V to provide the voltage Vp3 is not necessary and the drive voltage applying circuit 21 is therefore simplified.

Note that the technique for the voltage Vp3 above can be applied to the other embodiments.

In addition, during the electron holding period Tp3 (i.e., interval between successive pulse waveforms), a connection between the upper and lower electrodes may be opened. In this case, since it is not necessary to have a separate voltage source for voltage Vp3, the drive voltage applying circuit 21 can also be simplified.

Further, according to the fourth embodiment, the period from the start of rising (the increase start-timing) to the end of falling (the reduction end-timing) of the each pulse (pulse waveforms) (Tps, i.e., periods of the time t3 to t4, time t5 to t6, and time t7 to t8, in other words, width of voltage pulse) is set to be shorter than the period from the end of falling of the pulse to the start of rising of the next pulse (Trs, i.e., periods of the time t4 to t5 and time t6 to t7, in other words, voltage pulse rest period between the successive voltage pulses, serving as the electron holding period Tp3).

With this arrangement, since it is possible to reduce the time for applying the voltage larger than the coercive electric field voltage between the upper and lower electrodes, an amount of the above-mentioned leakage of electrons to the upper electrode 14 can be reduced. As a consequence, the total amount of emission electrons can be increased. In this case, preferably, the time Tps is 1/2 or less than the time Trs and, more preferably, 1/5 of the time Trs.

Further, according to the fourth embodiment, the electron-emitting apparatus comprises the phosphor(s) 19 and the time Tps is shorter than the time Trs. Thus, the persistent light of the phosphor(s) 19 is effectively used. As a result, a large amount of emission light can be obtained while keeping the energy for electron emission lower.

In addition, as seen from the time t8 to t9, the drive voltage Vin is set at the sixth voltage Vp6 after completing the last electron-emission. Therefore, as compared with the case where the drive voltage Vin is immediately changed to the negative voltage Vm2 at the time t8, the inrush current flowing through the element can be reduced. As a consequence, the abnormal occurrence of electron emission can be avoided.

Note that the final voltage-pulse (voltage for the time t7 to t8) during the period from the time t1 to the time t9 is excluded from the voltage pulse to which the above-mentioned operation (technique) for "setting the time (Tps) from the start of rising to the end of falling of the voltage pulse to be shorter than the time (Trs) from the end of falling of the voltage pulse to the start of the rising of the next voltage pulse" is applied.

### (Fifth embodiment)

Next, a description is given of an electron-emitting apparatus according to a fifth embodiment of the present invention. The electron-emitting apparatus according to the fifth embodiment is different from the electron-emitting apparatus 10 according to the first embodiment,
in that drive voltage Vin changes differently from the drive voltage Vin is changed in the electron-emitting apparatus 10. Therefore, the different point is mainly described hereinafter.

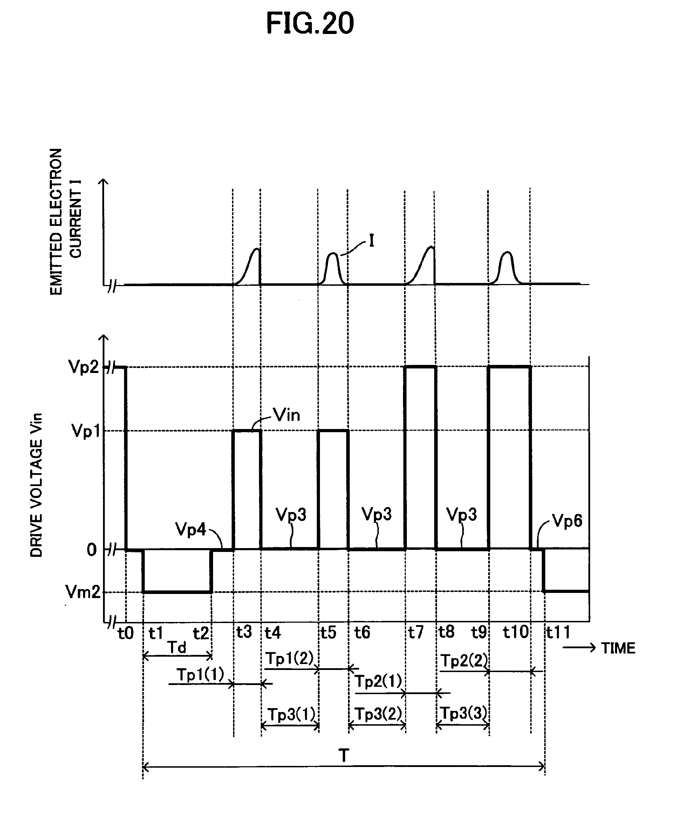

Similarly to the drive voltage applying circuit 21 according to the first embodiment, the drive voltage applying circuit 21 according to the fifth embodiment, as shown in Fig. 20, applies the drive voltage Vin, for setting the element voltage Vka at the negative voltage Vm2 during the electron accumulation period Td from the time t1 to t2, between the upper and lower electrodes. Thus, electrons are accumulated in the region near the micro through holes 14a of the emitter section 13.

Further, the drive voltage applying circuit 21 according to the fifth embodiment sets the drive voltage Vin at the fourth voltage Vp4 (in the example, Vp4=0) during the period from the time t2 to t3.

Subsequently, the drive voltage applying circuit 21 sets the drive voltage Vin at the first voltage Vp1 during the first electron-emission period Tp1(1) from the time t3 to t4. Consequently, as shown by emission electron current I in Fig. 20, electrons are emitted just after the time t3.

Then, the drive voltage applying circuit 21 applies, between the upper and lower electrodes, the drive voltage Vin (i.e., third voltage Vp3) for setting the element voltage Vka at the third voltage Vp3 during the period from the time t4 which is a timing before emitting all electrons to be emitted in the case of continuously applying the first voltage Vp1 between the upper and lower electrodes, to the time t5 which is a timing at which a (first) third-voltage-setting period Tp3(1) has elapsed. Consequently, at the time t4, the electron emission immediately stops (refer to the electron emission current I). The first third-voltage-setting period Tp3(1) is set to be longer than the first electron-emission period Tp1(1).

Subsequently, the drive voltage applying circuit 21 sets again the drive voltage Vin at the first voltage Vp1 during the second electron-emission period Tp1(2) from the time t5 to t6. Thus, dipoles which have not completed the positive-side polarization reversal during the first electron-emission period Tp1(1), starts the positive-side polarization reversal. Therefore, the electrons are emitted again via the micro through holes 14a. Then, just before the time t6, all dipoles which can undergo the positive-side polarization reversal under the first voltage Vp1 serving as the drive voltage Vin complete the polarization reversal. As a result, the electron emission temporarily stops.

Further, the drive voltage applying circuit 21 applies, between the upper and lower electrodes, the drive voltage Vin (i.e., third voltage Vp3) for setting the element voltage Vka at the third voltage Vp3 during a (second) third-voltage-setting period Tp3(2) from the time t6 to t7. Thus, after the time t6, the electron emission certainly stops. The second third-voltage-setting period Tp3(2) is set to be longer than the second electron-emission period Tp1 (2).

Further, the drive voltage applying circuit 21 sets the drive voltage Vin at the second voltage Vp2 (>Vp1, Vp2 being larger than Vp1) during a third electron-emission period Tp2(1) from the time t7 to t8. Consequently, dipoles which have not completed the positive-side polarization reversal, starts the positive-side polarization reversal and the electrons remaining in the region near the micro through holes 14a of the emitter section 13 are therefore emitted via the micro through holes 14a. That is, the third electron-emission is performed.

The drive voltage applying circuit 21 applies, between the upper and lower electrodes, the drive voltage Vin (i.e., third voltage Vp3) for setting the element voltage Vka at the third voltage Vp3 during the period from the time t8 which is a timing before emitting all electrons to be emitted in the case of continuously applying the second voltage Vp2 between the upper and lower electrodes, to the time t9 at which a (third) third-voltage-setting period Tp3(3) has elapsed. As a result, at the time t8, the electron emission immediately stops. The third third-voltage-setting period Tp3(3) is set to be longer than the third electron-emission period Tp2(1).

Subsequently, the drive voltage applying circuit 21 again sets the drive voltage Vin at the second voltage Vp2 during a fourth electron-emission period Tp2(2) from the time t9 to t10. Consequently, dipoles which have not completed the positive-side polarization reversal during the third electron-emission period Tp2(1), start the positive-side polarization reversal. Therefore, the electrons are emitted again via the micro through holes 14a. Then, just before the time t10, all dipoles complete the positive-side polarization reversal. As a result, all the electrons accumulated in the emitter section 13 are emitted. Simultaneously, the dipoles of the emitter section 13 are aligned in the same direction. That is, the polarization of the emitter section 13 becomes stable.

Thereafter, the drive voltage applying circuit 21 applies, between the upper and lower electrodes, the drive voltage Vin (i.e., sixth voltage Vp6) for setting the element voltage Vka at the sixth voltage Vp6 (in the example, Vp6=0) during the period from the time t10 to t11.

Then, at the time t11, the drive voltage applying circuit 21 applies, between the upper and the lower electrodes, the drive voltage Vin for setting the element voltage Vka at the negative voltage Vm2, similarly to the time t1. Thus, the electron accumulation period Td restarts. In other words, the period from the time t1 to t11 corresponds to one period T of accumulation and election of electrons.

As mentioned above, the drive voltage applying circuit (means) 21 according to the fifth embodiment applies, between the upper and lower electrodes, a voltage, serving as the drive voltage which makes the element voltage Vka reach the positive voltage for emitting electrons, which has a plurality of pulse waveforms generated intermittently, which increases the maximum values of the pulse waveforms in such a manner that each one of the maximum values of the pulse waveforms is equal to or larger than the maximum value of the other pulse waveform that appears just previously (i.e., drive voltage Vin during the period from the time t3 to t4, time t5 to t6, time t7 to t8, and time t9 to t10), which allows the element voltage Vka to reach the voltage Vp3 for preventing the accumulation of electrons to the emitter section 13 during the intervals of successive two pulse waveforms (periods from the time t4 to t5, t6 to t7, and t8 to t9).

Thus, similarly to the fourth embodiment, it is possible to provide an electron-emitting apparatus in which the power consumption is low and the total amount of emission electrons is increased. Further, since the voltage Vp3 is set to be smaller than the coercive electric field voltage (|Va|), the leakage of accumulated electrons is prevented.

In addition, in the drive voltage applying circuit 21 according to the fifth embodiment, at least one of the above-mentioned pulses (e.g., waveform during the time t3 to t4 or the time t7 to t8) is a pulse which starts to decrease to stop the electron emission before the accumulated electrons are emitted completely under the drive voltage whose level is determined by the one pulse.

Therefore, upon applying two or more pulse waveforms having the same maximum voltage each other (e.g., the voltage, whose maximum value is Vp1, during the period from the time t3 to t4 and the voltage, whose maximum value is also Vp1, during the period from the time t5 to t6), the electron emission is performed plural times. In other words, it is not necessary to generate a large number of pulse waveforms having different maximum values each other in order to obtain the electron emission many times.

Further, since the voltage of some of the pulse waveforms is reduced during the electron emission, the width of the pulse waveform (e.g., period Tp1(1) from the time t3 to t4 and the period Tp2(1) from the time t7 to t8) is reduced. Consequently, the frequency for electron emission is increased, and the persistent light of the phosphor(s) 19 is effectively used.

Preferably, the period Tp1(2) is longer than the period Tp1(1) and the period Tp2(2) is longer than the period Tp2(1). That is, when applying the voltage of the pulses (pulse waveforms) having the same maximum value each other to the element plural times so as to emit the electrons, it is preferable that the width (e.g., Tp1 (2)) of the second or later pulse (waveform) generated after the first pulse (waveform) is set to be larger than the width (Tp1(1)) of the first pulse (waveform).

The reason for the above is that, the electrons accumulated can be emitted even if the width of the first pulse waveform is relatively shorter, because the amount of electrons accumulated when applying the first pulse waveform is larger. In addition, the electron emission by the first pulse reduces the amount of electrons remaining in the emitter section 13, and thus, the width of the pulse waveform after the first pulse should be elongated in order to emit certainly the electrons when applying the pulse after the first pulse.

As mentioned above with respect to the fourth embodiment, it is also preferable in the fifth embodiment that the pulse width Tp2(2) of the final voltage-pulse be set to be longer than the pulse widths (i.e., Tp1(1), Tp1(2) and Tp2(1)) other than the pulse width Tp2(2).

### (Sixth embodiment)

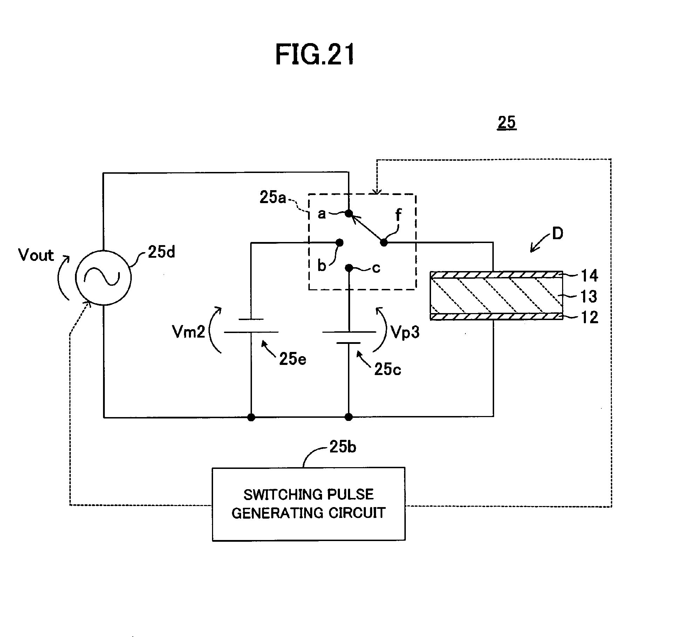

Next, a description is given of an electron-emitting apparatus according to a sixth embodiment of the present invention. The electron-emitting apparatus according to the sixth embodiment is different from the electron-emitting apparatus 10 according to the first embodiment,
in that the drive voltage applying circuit 21 according to the first embodiment is replaced by a drive voltage applying circuit 25 shown in Fig. 21. Therefore, the different point is mainly described hereinafter.

The drive voltage applying circuit 25 comprises: a switching circuit (switching element) 25a; a switching pulse generating circuit 25b serving as switching control means together with the switching circuit 25a; a constant-voltage source (keeping-voltage generating source) 25c; a sinusoidal wave generating circuit 25d; and the constant-voltage source (voltage generating source for electron accumulation) 25e.

The switching circuit 25a comprises switching contacts "a" to "c" and a fixed contact "f". The switching circuit 25a connects one of the switching contacts "a" to "c" to the fixed contact "f" in accordance with an instructing signal from the switching pulse generating circuit 25b. The fixed contact "f" is connected to the upper electrode 14 of an electron-emitting element D.

The constant-voltage source 25c generates the third voltage Vp3 at both terminals thereof. Both the terminals of the constant-voltage source 25c are connected to the lower electrode 12 of the electron-emitting element D and the switching contact "c", respectively. When the switching circuit 25a connects the switching contact "c" to the fixed contact "f", the constant-voltage source 25c applies the third voltage Vp3 to the upper electrode 14 relative to the lower electrode 12.

The sinusoidal wave generating circuit 25d generates a voltage Vout which alters with sinusoidal waves at both the terminals thereof. An amplitude V0 of the voltage Vout is set to be the second voltage Vp2. A period T0 of the voltage Vout is set to be a period shorter than a value (T/N) obtained by dividing one period T for one electron accumulation and emission by the number N of electron emission caused during the one period T (i.e., N being the number of voltage pulses during the one period T). Both terminals of the sinusoidal wave generating circuit 25d are connected to the lower electrode 12 and the switching contact "a", respectively. When the switching circuit 25a connects the switching contact "a" to the fixed contact "f", the voltage Vout is applied to the upper electrode 14 relative to the lower electrode 12.

The constant-voltage source 25e generates the predetermined negative voltage Vm2 at both terminals thereof. Both the terminals of the constant-voltage source 25e are connected to the lower electrode 12 of the electron-emitting element D and the switching contact "b", respectively. When the switching circuit 25a connects the switching contact "b" to the fixed contact "f', the predetermined negative voltage Vm2 is applied to the upper electrode 14 relative to the lower electrode 12. Note that the constant-voltage source 25e may be replaced with a voltage source which changes the voltage Vm2 in accordance with the amount of electrons to be emitted (amount of electrons to be accumulated).

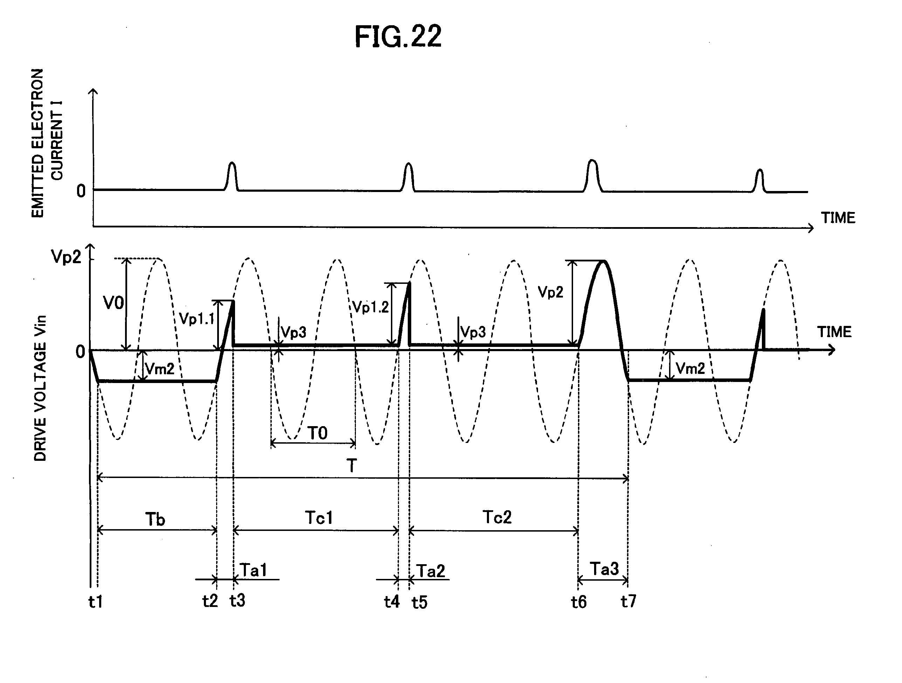

Next, a description is given of the operation of the electron-emitting apparatus using the drive voltage applying circuit 25 with reference to Fig. 22. First, the switching pulse generating circuit 25b connects the fixed contact "f" to the switching contact "b" at the time t1. Thus, the negative voltage Vm2 is applied between the upper and lower electrodes, and the element voltage Vka therefore changes toward the predetermined negative voltage Vm2. Consequently, the negative-side polarization reversal is caused in the emitter section 13, and thus, the electrons are accumulated in the region near the micro through holes 14a of the emitter section 13.

At the time t2 when an electron accumulation period Tb has elapsed from the time t1, the switching pulse generating circuit 25b connects the fixed contact "f" to the switching contact "a". Thus, the sinusoidal wave voltage Vout generated by the sinusoidal wave generating circuit 25d is applied between the upper and lower electrodes. That is, the drive voltage Vin becomes the sinusoidal wave voltage Vout. The time t2 is set at the timing from which the sinusoidal wave voltage Vout starts to increase from the predetermined negative voltage Vm2. Thereafter, at the time t3 at which the drive voltage Vin becomes the first lower voltage Vp1.1, the switching pulse generating circuit 25b connects the fixed contact "f" with the switching contact "c".

Consequently, the element voltage Vka gradually increases during a first electron-emission operation period Ta1 from the time t2 to the time t3, and reaches the first lower voltage Vp1.1 at the time t3. Therefore, immediately before the time t3, the positive-side polarization reversal is caused and the electrons are emitted.

The switching pulse generating circuit 25b continuously connects the fixed contact "f" with the switching contact "c" during a third-voltage-setting period Tc1 from the time t3 to the time t4. The time t4 is set at the timing at which a time duration which is roughly equal to the double the period T0 of the sinusoidal wave voltage Vout has elapsed from the time t2, and is further set at the timing from which the sinusoidal wave voltage Vout starts to increase from the third voltage Vp3. During the (first) third-voltage-setting period Tc1, the electrons are held in the emitter section 13.

At the time t4, the switching pulse generating circuit 25b again connects the fixed contact "f" to the switching contact "a". Thus, the sinusoidal wave voltage Vout generated by the sinusoidal wave generating circuit 25d is applied between the upper and lower electrodes. That is, the drive voltage Vin becomes the sinusoidal wave voltage Vout. Thereafter, at the time t5 at which the drive voltage Vin becomes the first higher voltage Vp1.2, the switching pulse generating circuit 25b connects the fixed contact "f" to the switching contact "c".

Consequently, the element voltage Vka gradually increases during a second electron-emission operation period Ta2 from the time t4 to the time t5, and reaches the first higher voltage Vp1.2 at the time t5. Therefore, dipoles which have not completed the positive-side polarization reversal starts the positive-side polarization reversal. As a result, the electrons remaining in the region near the micro through holes 14a of the emitter section 13 are emitted via the micro through holes 14a. That is, the electrons are emitted again during the period from the time immediately before the time t5 to the time t5.

The switching pulse generating circuit 25b connects the fixed contact "f" to the switching contact "c" during a third-voltage-setting period Tc2 from the time t5 to the time t6. The time t6 is set at the timing at which a time duration which is equal to the double the period T0 of the sinusoidal wave voltage Vout has elapsed from the time t4, and thus, is set at the timing from which the sinusoidal wave voltage Vout starts to increase from the third voltage Vp3. During the (second) third-voltage-setting period Tc2, the electrons are held in the emitter section 13.

The switching pulse generating circuit 25b connects the fixed contact "f" to the switching contact "a" at the time t6. Thus, the sinusoidal wave voltage Vout is applied between the upper and lower electrodes. Thereafter, the switching pulse generating circuit 25b connects the fixed contact "f" to the switching contact "b" at the time t7. The time t7 is set at the time at which the sinusoidal wave voltage Vout reaches the predetermined negative voltage Vm2 after the peak on the positive side that appears after the time t6.

As a result, the element voltage Vka reaches the second voltage Vp2 during a third electron-emission operation period Ta3 from the time t6 to the time t7. Therefore, dipoles which have not completed the positive-side polarization reversal by the time t6, performs the positive-side polarization reversal, and thus, all the electrons remaining in the emitter section 13 are emitted.

After the time t7, the electron accumulation period Tb restarts. In other words, the period from the time t1 to the time t7 corresponds to one period T for electron accumulation and emission.

As described above, according to the sixth embodiment, in order to accumulate the electrons in the emitter section 13, the upper electrode 14 and the lower electrode 12 are connected to both the terminals of the voltage generating source for electron accumulation 25e. The upper electrode 14 and the lower electrode 12 are thereafter connected to both the terminals of the sinusoidal wave generating circuit 25d at the appropriate timings so that the voltage having a plurality of pulse waveforms (voltage pulses for electron emission) can be applied to the element.

The drive voltage applying circuit 25 increases each of a plurality of the pulse waveforms (drive voltage Vin during the periods of the times t2 to t3, t4 to t5, and t6 to t7, i.e., voltage pulse) along with the sinusoidal wave. Therefore, with the simple configuration, it is possible to give an inclination to the each of pulse waveforms.

In addition, according to the sixth embodiment, relationships of Ta1<Tc1 and Ta2<Tc2 (i.e., Tps<Trs) are also established. Therefore, it is possible to reduce the amount of electrons moving on the surface of the emitter section 13 and leaked to the upper electrode 14 among the electrons accumulated in the emitter section 13.

Furthermore, relationships of Ta3>Ta2 and Ta3>Ta1 are established. In other words, the pulse width of the final voltage-pulse is larger than the pulse width of another voltage-pulse. In addition, the maximum value of the final voltage-pulse (Vp2) is significantly larger than the maximum values of the other voltage-pulses (Vp1.1 and Vp1.2). As a consequence, the polarization of the emitter section 13 becomes stable by the final voltage-pulse generated just before the restart timing of electron accumulation operation (time t7 shown in Fig. 22).

As described, the third voltage Vp3 may be 0V and, alternatively, the third voltage Vp3 may be the negative voltage. In order to set the third voltage Vp3 to be 0V, the constant-voltage source 25c is replaced with a voltage source for generating 0V. Specifically, the contact "c" is connected to the lower electrode 12 via a lead or a resistor having a predetermined resistance. In other words, such a lead or such a resistor can constitute the constant-voltage source 25c. As above, if the third voltage Vp3 is set to be 0V, a power supply circuit for generating a predetermined voltage other than 0V (power supply circuit for generating the third voltage) is not necessary and the drive voltage applying circuit 25 is therefore simplified.

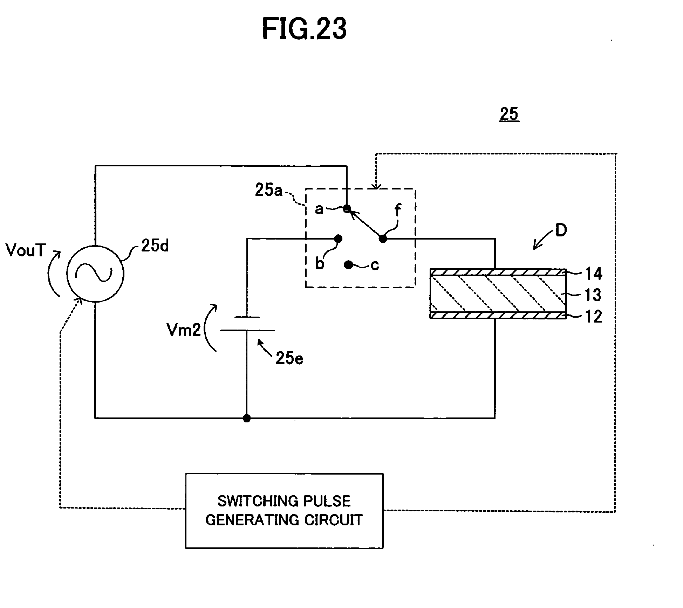

Further, as shown in Fig. 23, the switching contact "c" may be a contact which is not connected to any portion, i.e., may be opened. With this configuration, since it is not necessary to provide the constant-voltage source 25c additionally, the drive voltage applying circuit 31 can be manufactured with low costs.

### (Seventh embodiment)

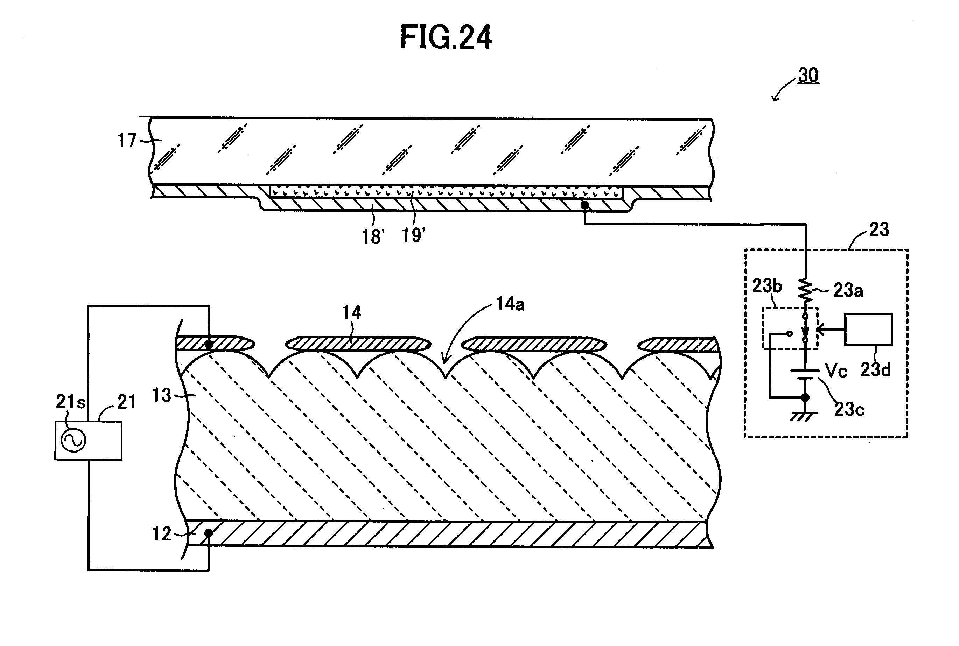

Next, a description is given of an electron-emitting apparatus 30 according to the seventh embodiment of the present invention with reference to Fig. 24. The electron-emitting apparatus 30 is different from the electron-emitting apparatus 10 in that the electron-emitting apparatus 10 includes a collector electrode 18' and a phosphor 19' in place of the collector electrode 18 and the phosphor 19 in the electron emitting apparatus 10, respectively. Thus, the description below is mainly directed to this difference.

In the electron-emitting apparatus 30, the phosphor 19' is disposed on the back surface of the transparent plate 17 (i.e., on the surface facing the upper electrode 14), and the collector electrode 18' is disposed to cover the phosphor 19'. The collector electrode 18' has a thickness that allows electrons emitted from the emitter section 13 via the micro through holes 14a in the upper electrode 14 to travel through (penetrate) the collector electrode 18'. The thickness of the collector electrode 18' is preferably 100 nm or less. The thickness of the collector electrode 18' can be larger as the kinetic energy of the emitted electrons is higher.

The configuration of this embodiment is typically employed in cathode ray tubes (CRTs). The collector electrode 18' functions as a metal back. The electrons emitted from the emitter section 13 through the micro through holes 14a in the upper electrode 14 travel through the collector electrode 18', enter the phosphor 19', and excite the phosphor 19', thereby causing light emission. The advantages of the electron-emitting apparatus 30 are as follows:
(a) When the phosphor 19' is not electrically conductive, electrification (negative charging) of the phosphor 19' can be avoided. Thus, the electric field that accelerates electrons can be maintained.
(b) Since the collector electrode 18' reflects light generated by the phosphor 19', the light can be emitted toward the transparent plate 17-side (emission surface side) with higher efficiency.
(c) Since collision of excessive electrons against the phosphor 19' can be avoided, deterioration of the phosphor 19' and the generation of gas from the phosphor 19' can be avoided.

### (Materials of Constituent Components and Production Examples)

The materials of the constituent components of the electron-emitting apparatuses described above and the method for producing the constituent components will now be described.

### (Lower electrode 12)

The lower electrode is made of an electrically conductive material described above. Examples of the preferable materials for the lower electrode will be described in detail below:
(1) Conductors resistant to high-temperature oxidizing atmosphere (e.g., elemental metals or alloys)
   Examples: high-melting-point noble metals such as platinum, iridium, palladium, rhodium, and molybdenum
   Examples: materials mainly made of a silver-palladium alloy, a silver-platinum alloy, or a platinum-palladium alloy
(2) Mixtures of ceramics having electrical isolation and being resistant to high-temperature oxidizing atmosphere and elemental metals
   Example: a cermet material of platinum and a ceramic
(3) Mixtures of ceramics having electrical isolation and being resistant to high-temperature oxidizing atmosphere and alloys
(4) Carbon-based or graphite-based materials

Among these materials above, elemental platinum and materials mainly composed of platinum alloys are particularly preferable. It should be noted that when a ceramic material is added to the electrode material, it is preferable to use roughly 5 to 30 percent by volume of the ceramic material. Materials similar to those of the upper electrode 14 described below may also be used for the lower electrode. The lower electrode is preferably formed by a thick-film forming process. The thickness of the lower electrode is preferably 20 µm or less and most preferably 5 µm or less.

### (Emitter Section 13)

The dielectric material that constitutes the emitter section may be a dielectric material having a relatively high relative dielectric constant (for example, a relative dielectric constant of 1,000 or higher). Examples of the preferable material for the emitter section are as follows:
(1) Barium titanate, lead zirconate, lead magnesium niobate, lead nickelniobate, lead zinc niobate, lead manganese niobate, lead magnesium tantalate, lead nickel tantalate, lead antimony stannate, lead titanate, lead magnesium tungstate, and lead cobalt niobate
(2) Ceramics containing any combination of the substances listed in (1) above
(3) Ceramics described in (2) further containing an oxide of lanthanum, calcium, strontium, molybdenum, tungsten, barium, niobium, zinc, nickel, or manganese; ceramics described in (2) further containing any combination of the oxides described above; and the ceramics described above further containing other compounds
(4) Materials mainly containing 50% or more of the materials listed in (1) above

It is noted that, for example, a two-component system containing lead magnesium niobate (PMN) and lead titanate (PT), i.e., nPMN-mPT (n and m represent molar ratios), can exhibit a decreased Curie point and a large relative dielectric constant at room temperature by increasing the molar ratio of the PMN. In particular, nPMN-mPT having n of 0.85 to 1.0 and m of 1.0-n exhibits a relative dielectric constant of 3,000 or higher and is thus particularly preferable as the material for the emitter section. For example, the nPMN-mPT having n of 0.91 and m of 0.09 exhibits a relative dielectric constant of 15,000 at room temperature. The nPMN-mPT having n of 0.95 and m of 0.05 exhibits a relative dielectric constant of 20,000 at room temperature.

Furthermore, a three-component system containing lead magnesium niobate (PMN), lead titanate (PT), and lead zirconate (PZ), i.e., PMN-PT-PZ, can exhibit a higher relative dielectric constant by increasing the molar ratio of PMN. In this three-component system, the relative dielectric constant can be increased by adjusting the composition to near the morphotropic phase boundary (MPB) between the tetragonal and pseudo cubic phases or between the tetragonal and rhombohedral phases.

For example, PMN:PT:PZ of 0.375:0.375:0.25 yields a relative dielectric constant of 5,500, and PMN:PT:PZ of 0.5:0.375:0.125 yields a relative dielectric constant of 4,500. These compositions are particularly preferable as the material for the emitter section.

Furthermore, a metal, such as platinum, may be preferably added to the dielectric material as long as the insulating ability can be ensured in order to increase the dielectric constant. For example, 20 percent by weight of platinum may preferably be added to the dielectric material.

A piezoelectric/electrostrictive layer, a ferroelectric layer or an antiferroelectric layer may be used as the emitter section. When the emitter section is a piezoelectric/electrostrictive layer, the piezoelectric/electrostrictive layer may be composed of a ceramic containing lead zirconate, lead magnesium niobate, lead nickel niobate, lead zinc niobate, lead manganese niobate, lead magnesium tantalate, lead nickel tantalate, lead antimony stannate, lead titanate, barium titanate, lead magnesium tungstate, lead cobalt niobate, or any combination of these.

Obviously, the emitter section may be made of a material containing 50 percent by weight or more of the above-described compound as the main component. Among the ceramics described above, a ceramic containing lead zirconate is most frequently used as the constituent material for the piezoelectric/electrostrictive layer that serves as the emitter section.

When the piezoelectric/electrostrictive layer is formed using a ceramic, the ceramic may further contain an oxide of lanthanum, calcium, strontium, molybdenum, tungsten, barium, niobium, zinc, nickel, or manganese, or any combination of these oxides, or other compounds. The ceramic described above may further contain SiO₂, CeO₂, Pb₅Ge3O₁₁, or any combination of these. In particular, a PT-PZ-PMN-based piezoelectric material containing 0.2 percent by weight of SiO₂, 0.1 percent by weight of CeO₂, or 1 to 2 percent by weight of Pb₅Ge₃O₁₁ is preferable.

In detail, for example, a ceramic mainly composed of lead magnesium niobate, lead zirconate, and lead titanate, and containing lanthanum or strontium in addition to these is particularly preferable.

The piezoelectric/electrostrictive layer may be dense or porous. When the piezoelectric/electrostrictive layer is porous, the void ratio is preferably 40% or less.

When an antiferroelectric layer is used as the emitter section 13, the antiferroelectric layer preferably contains lead zirconate as a main component, lead zirconate and lead stannate as main components, lead zirconate containing lanthanum oxide as an additive, or a lead zirconate and lead stannate containing lead niobate as an additive.

The antiferroelectric layer may be porous. When the antiferroelectric layer is porous, the void ratio thereof is preferably 30% or less.

In particular, strontium tantalate bismuthate (SrBi₂Ta₂O₉) is suitable for the emitter section, since it exhibits low fatigue by repeated polarization reversal. The material exhibiting low fatigue due to polarization reversal is a laminar ferroelectric compound represented by general formula (BiO₂)²⁺(Aₘ₋₁BₘO₃ₘ₊₁)²⁻. In the formula, the ions of the metal A are Ca²⁺, Sr²⁺, Ba²⁺, Pb²⁺, Bi³⁺, La³⁺, or the like, and the ions of the metal B are Ti⁴⁺, Ta⁵⁺, Nb⁵⁺, or the like. Alternatively, a piezoelectric ceramic based on barium titanate, lead zirconate, or PZT may be combined with an additive to impart semiconductive properties to the ceramic. In such a case, since the emitter section 13 provide an uneven electric field distribution, it becomes possible to concentrate the electric field near the boundary with the upper electrode that contributes to emit electrons.

The baking (firing) temperature of the emitter section 13 can be decreased by adding a glass component, such as lead borosilicate glass, or a low-melting-point compound (such as bismuth oxide) other than the glass component to the piezoelectric/electrostrictive/ferroelectric/antiferroelectric ceramic.

In forming the emitter section with the piezoelectric/electrostrictive/ferroelectric/antiferroelectric ceramic, the emitter section may be formed from a molded sheet, a laminated sheet, or a composite of the molded sheet or the laminated sheet stacked or bonded on a supporting substrate.

An emitter section that is hardly damaged by collision of electrons or ions can be produced by using a material having a high melting point or a high evaporation temperature, e.g., a non-lead material, for the emitter section.

The emitter section may be formed by various thick-film forming processes, such as a screen printing process, a dipping process, an application process, an electrophoresis process, and an aerosol deposition process, or by various thin-film forming processes, such as an ion-beam process, a sputtering process, a vacuum deposition process, an ion-plating process, a chemical vapor deposition (CVD) process, and a plating process. In particular, a powdered piezoelectric/electrostrictive material may be molded to form the emitter section, and the molded emitter section may be impregnated with a low-melting-point glass or sol particles to form a film at a temperature as low as 700°C or 600°C or less.

### (Upper Electrode 14)

An organometal paste is used to form the upper electrode, since it can produce a thin film by firing (baking). An example of the organometal paste is a platinum resinate paste. The upper electrode is preferably made of an oxide electrode that can suppress the fatigue due to polarization reversal or a platinum resinate paste containing an oxide for suppress the fatigue due to polarization reversal. Examples of the oxide electrode that suppress the fatigue due to polarization reversal include ruthenium oxide (RuO₂), iridium oxide (IrO₂), strontium ruthenate (SrRuO₃), La₁₋ₓSrₓCoO₃ (e.g., x = 0.3 or 0.5), La₁₋ₓCaₓMnO₃ (e.g., x = 0.2), and La₁₋ₓCaₓMn_{1-y}CO_{y}O₃ (e.g., x = 0.2, y =0.05).

Furthermore, preferably, the average diameter of the through-holes 14a of the upper electrode 14 is smaller than the grain size of the dielectric material of the emitter section 13. In addition, preferably, the upper electrode 14 contains a metal, and the through-holes 14a are pores formed by crystal grains of the metal. The process of forming the upper electrode 14 and the materials of the upper electrode 14 will be described in detail below.

The upper electrode 14 can be formed by extending an "organometallic compound containing at least two types of metals" of silver (Ag), gold (Au), iridium (Ir), rhodium (Rh), ruthenium (Ru), platinum (Pt), platinum (Pd), aluminum (Al), cupper (Cu), nickel (Ni), chromium (Cr), molybdenum (Mo), tungsten (W), and titanium (Ti) on the upper portion of the material forming the emitter section 13 in the shape of a film and baking the compound at a predetermined temperature.

Here, the "organometallic compound containing at least two types of metals" may be any of a compound formed by mixing two or more types of organometallic compounds each of which containing only one type of metal, one type of organometallic compound containing two or more types of metals, and a compound formed by mixing one type of organometallic compound containing two or more types of meals with another organometallic compound. Further, preferably, the "organometallic compound containing at least two types of metals" may contain at least a noble metal. Furthermore, preferably, the noble metal may include platinum (Pt), gold (Au), or iridium (Ir).

### (Example 1)

For example, one organometallic compound containing only one type of metal, i.e., Pt and another organometallic compound containing only one type of metal, i.e., Ir having the melting point higher than that of Pt are mixed with 97 percent by weight of Pt and 3 percent by weight of Ir (Pt:Ir = 97:3). Then, the mixed organometallic compound paste is printed on the upper surface of the material forming the emitter section 13 by screen printing so as to be extended in the shape of a film, and is thereafter dried at a 100°C temperature. Then, the formed compound is heated and temperature-increased to 700°C with the temperature rise rate 47°C/min (47°C per minute). The organometallic compound is kept in this state for 30 minutes to be baked (fired). By this process, the upper electrode 14 is manufactured. Alternatively, the mixture and agitation of 97 percent by weight of Pt and 3 percent by weight of Ir may be printed on the material forming the emitter section 13, then may be dried at 100°C, and may be temperature-increased to 700°C with the temperature rise rate of 1400°C/min, may be kept in this state for 30 minutes to be manufactured (baked).

### (Example 2)

One organometallic compound containing only one type of metal, i.e., Pt and another organometallic compound containing only one type of metal, i.e., Au having the melting point lower than that of Pt are mixed with 95 percent by weight of Pt and 5 percent by weight of Au (Pt:Au=95:5). Then, the mixed organometallic compound paste is printed on the upper surface of the material forming the emitter section 13 by screen printing to be extended in the shape of a film, and is thereafter dried at 100°C. Further, the formed compound is heated and temperature-increased to 650°C with the temperature rise rate of 43°C/min (43°C per minute) and is kept in this state for 30 minutes to be baked (fired). By this process, the upper electrode 14 can be preferably manufactured.

### (Example 3)

The upper electrode 14 can be manufactured, containing three types of organometallic compounds. For example, one organometallic compound containing only one type of metal, i.e., Pt, serving as the base material, another organometallic compound containing only one type of metal, i.e., Au having the melting point lower than that of Pt, and another organometallic compound containing one type of metal, i.e., Ir having the melting point higher than that of Pt are mixed with 93 percent by weight of Pt, 4.5 percent by weight of Au, and 2.5 percent by weight of Ir. Then, the mixed organometallic compound paste is printed on the upper surface of the material forming the emitter section 13 by screen printing to be extended in the shape of a film, and is thereafter dried at 100°C. Further, the formed compound is heated and temperature-increased to 700°C with the temperature rise rate of 47°C/min (47°C per minute). The organometallic compound is kept in this state for 30 minutes to be baked (fired). By this process, the upper electrode can be preferably manufactured.

### (Example 4)

The mixed organometallic compound containing Pt, Au, and Ir as described in the Example 2 is printed on the upper surface of the material forming the emitter section 13 by screen printing to be extended in the shape of a film. Thereafter, the compound is dried at a 100°C temperature. Further, the formed compound is heated and temperature-increased to 700°C with the temperature rise rate of 23°C/sec (23°C per second, i.e., 1400°C per minute). The mixed organometallic compound is kept in this state for 30 minutes to be baked (fired). By this process, the upper electrode 14 can be manufactured.

### (Example 5)

The upper electrode containing only one type of metal can be manufactured as follows. For example, an organometallic compound paste containing only one type of metal, i.e., the above-mentioned metal (here, Pt) is printed on the upper surface of the material forming the emitter section 13 by screen printing to be extended in the shape of film. Thereafter, the compound is dried at 100°C. Further, the formed compound is heated and temperature-increased to 600°C with the temperature rise rate of 20°C/sec (20°C per second, i.e., 1200°C per minute). The organometallic compound is kept in this state for 30 minutes to be baked (fired).

The above-manufactured upper electrode 14 has the micro through holes 14a whose average diameter is 10 nm or more and less than 100 nm, and thus can emit a large amount of electrons. As mentioned above, the average diameter of the micro through holes 14a may be 0.01 µm or more and 10 µm or less.

Further, the upper electrode may contain an aggregate of scale materials (e.g., black lead) or an aggregate of conductive materials including scale materials. The above-described material aggregate originally has a portion of separated scales. Therefore, such portion can be used as the micro through hole of the upper electrode without the baking (firing). Furthermore, organic resin and a metallic thin film are laminated on the emitter section in this order and the organic resin is thereafter baked to form the micro through holes in the metallic thin film, thereby forming the upper electrode.

The upper electrode may contain the above materials and may be formed by various thick-film forming processes, such as a screen printing process, a spraying process, a coating process, a dipping process, an application process, and an electrophoresis process, or by various typical thin-film forming processes, such as a sputtering process, an ion-beam process, a vacuum deposition process, anion-plating process, a chemical vapor deposition (CVD) process, and a plating process.

As described above, the electron-emitting apparatus according to the present invention stepwise increases the drive voltage, thereby emitting the electrons a plurality of times, which are accumulated in the emitter section 13 by once electron-accumulation operation. Therefore, the inrush current does not flow through the electron-emitting element. Thus, the deterioration of the element due to the heat is prevented and the amount of emitted electrons can be increased.

Further, in the electron-emitting apparatuses, the collector electrode 18 is earthed while unnecessary electron-emission may be emitted, and the collector voltage Vc is applied to the collector electrode 18 while the electron emission is required. Thus, each of the electron-emitting apparatus can impart sufficient energy to electrons properly emitted while avoiding unnecessary electron emission, and therefore, provide a display that can present satisfactory images. Moreover, even when the space between the upper electrode 14 and the collector electrode 18 enters a plasma state, the plasma can be eliminated since the collector electrode 18 is intermittently turned off. As a result, continuous generation of intense emission due to a continuing plasma state can be avoided.

In addition, the apparatus includes the focusing electrode. Thus, the distance between the upper electrode and the collector electrode can be increased since the emitted electrons substantially travel in the right upward direction of the upper electrode. As a result, dielectric breakdown between the upper electrode and the collector electrode can be suppressed or avoided. Because the possibility of dielectric breakdown between the upper electrode and the collector electrode reduces, the first collector voltage V1 (Vc) applied to the collector electrode 18 during the period in which the collector electrode 18 is turned on can be set larger. Thus, large energy can be imparted to the electrons reaching the phosphors, and the luminance of the display can be thereby increased.

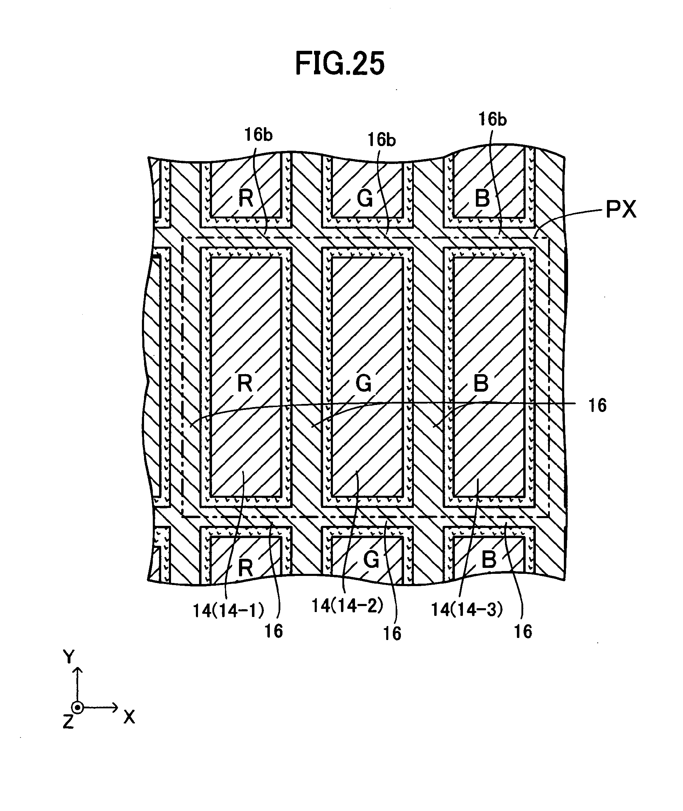

Note that the present invention is not limited to the embodiments described above and various other modifications and alternations can be adopted without departing from the scope of the invention. For example, each of the electron-emitting apparatus according to above described embodiments comprises a plurality of electron-emitting elements, however, the electron-emitting apparatus may comprise only one electron-emitting element. Further, for example, as shown in Fig. 25, the focusing electrodes 16 may be formed not only between the upper electrodes 14 adjacent to each other in the X-axis direction but also between the upper electrodes 14 adjacent to each other in the Y-axis direction in a plan view.

In addition, the phosphor may be in contact with the upper electrode 14 on the surface of the upper electrode 14 opposed to the emitter section 13. With this configuration, electrons emitted via the micro through holes 14a of the upper electrodes 14 collide with the phosphor disposed just on the top of the upper electrode 14, and the phosphor is excited to generates the light. Note that the above-mentioned phosphor as well as both the phosphors 19 and 19' described in the embodiments are the "phosphors for emitting light by the collision of electrons, disposed to be opposed to the upper electrode 14 on the upper part of the upper electrode 14".

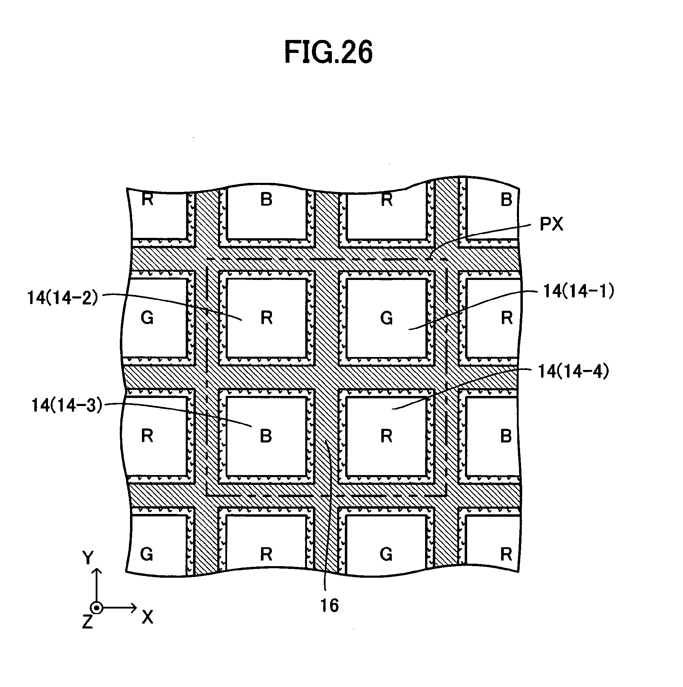

Furthermore, as shown in Fig. 26, one pixel PX of the electron-emitting apparatus may include four elements (a first upper electrode 14-1, a second upper electrode 14-2, a third upper electrode 14-3, and a fourth upper electrode 14-4), and focusing electrodes 16. In such a case, for example, a green phosphor (not shown) is disposed directly above the first upper electrode 14-1, a red phosphor (not shown) is disposed directly above each of the second upper electrode 14-2 and the fourth upper electrode 14-4, and a blue phosphor (not shown) is disposed directly above the third upper electrode 14-3. The focusing electrodes 16 are formed to surround each of the upper electrodes 14. With this arrangement, electrons emitted from the upper electrode 14 of a particular element reach only the phosphor disposed directly above the particular upper electrode 14. Thus, satisfactory color purity can be maintained, and blurring of the image patterns can be avoided.

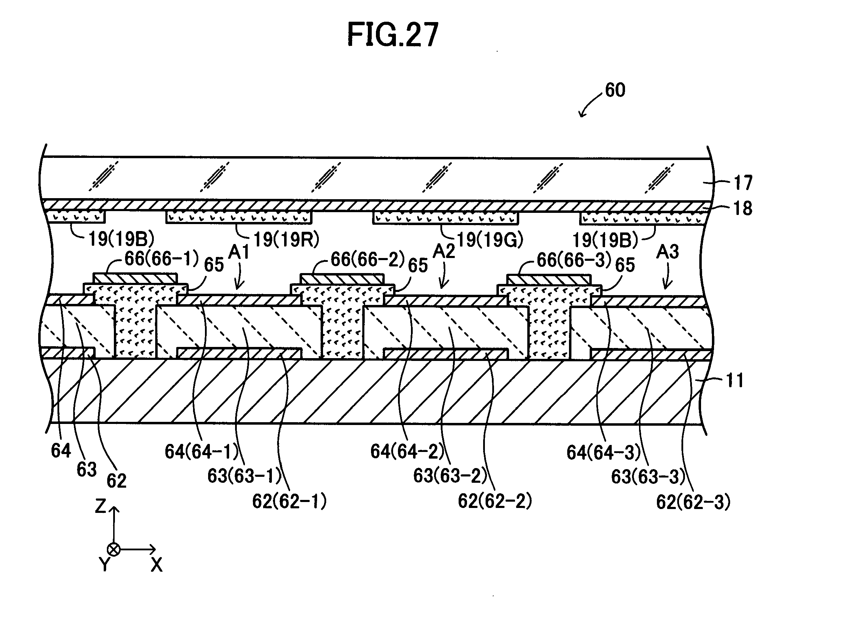

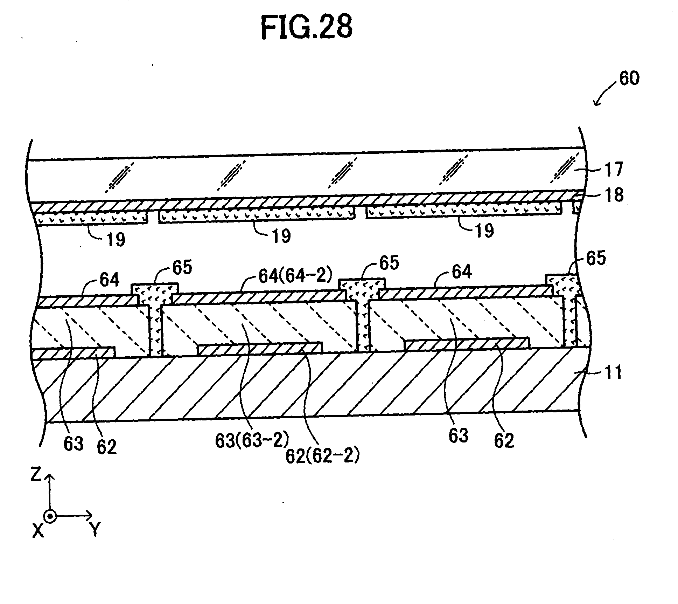

As shown in Figs. 27 and 28, an electron-emitting apparatus 60 according to the present invention may include a plurality of completely independent elements aligned on the substrate 11, each element including a lower electrode 62, an emitter section 63, and an upper electrode 64. In this apparatus, the gaps between the elements may be filled with insulators 65, and the focusing electrodes 66 may be disposed on the upper surfaces of the insulators 65 between the upper electrodes 64 adjacent to each other in the X-axis direction. With the electron-emitting apparatus 60 having such a structure, electrons can be emitted from each of the elements either simultaneously or at independent timings.

The substrate 11 may be made of a material primarily containing aluminum oxide or a material primarily made of a mixture of aluminum oxide and zirconium oxide.

In addition, in the fourth and the fifth embodiments, the drive voltage has a rectangular waveform (i.e., the voltage pulse is a rectangular wave), the drive voltage may alter with an inclination when increasing and decreasing. In other words, the waveform of the voltage pulse for emitting electrons may be in a shape of a trapezoid or a triangle, and so on.

Furthermore, the level of a voltage applied between the upper electrode and the lower electrode during an interval between successive voltage pulses for electron emissions (i.e., the level of the drive voltage at which the element voltage is set at a voltage level that causes no electron accumulation into the emitter section during a period between two successive pulses for electron emissions) may be a value which differs for each voltage pulse interval; or paraphrasing it more specifically, the levels of the third voltage Vp3 during the electron holding periods Tp3 may be values varying from one electron holding period Tp3 to another.

## Claims

1. An electron-emitting apparatus comprising:
an element having:
an emitter section made of a dielectric material,
a lower electrode disposed below the emitter section, and
an upper electrode disposed above the emitter section to oppose the lower electrode, with the emitter section sandwiched therebetween, the upper electrode having a plurality of micro through holes and formed in such a manner that its surface around the circumference of the micro through holes facing the emitter section being apart from the emitter section,
wherein the element supplies electrons to the emitter section from the upper electrode to accumulate the electrons in the emitter section when an element voltage which is a potential of the upper electrode relative to a potential of the lower electrode is a negative voltage whose absolute value is larger than a predetermined level, and emits the electrons accumulated in the emitter section via the micro through holes when the element voltage is a positive voltage whose absolute value is larger than another predetermined level if the electrons are accumulated in the emitter section; and
drive voltage applying means for applying a drive voltage between the upper electrode and the lower electrode to cause the element voltage to reach the negative voltage and thereafter to cause the element voltage to reach the positive voltage,
wherein the drive voltage applying means is configured to increases the positive voltage stepwise.

2. An electron-emitting apparatus comprising:
an element having:
an emitter section made of a dielectric material,
a lower electrode disposed below the emitter section, and
an upper electrode disposed above the emitter section to oppose the lower electrode, with the emitter section sandwiched therebetween, the upper electrode having a plurality of micro through holes and formed in such a manner that its surface around the circumference of the micro through holes facing the emitter section being apart from the emitter section,
wherein the element supplies electrons to the emitter section from the upper electrode to accumulate the electrons in the emitter section when an element voltage which is a potential of the upper electrode relative to a potential of the lower electrode is a negative voltage whose absolute value is larger than a predetermined level, and emits the electrons accumulated in the emitter section via the micro through holes when the element voltage is a positive voltage whose absolute value is larger than another predetermined level if the electrons are accumulated in the emitter section; and
drive voltage applying means for applying a drive voltage between the lower electrode and the upper electrode in such a manner that the drive voltage causes the element voltage to reach the negative voltage in order that electrons are accumulated in the emitter section, and then causes the element voltage to reach the positive voltage in order that the accumulated electrons are emitted,
wherein said drive voltage applying means is configured to apply, as the drive voltage for causing the element voltage to reach the positive voltage, between the lower electrode and the upper electrode, a voltage which includes a plurality of pulses generated intermittently, the voltage altering in such a manner that the maximum value of each of the pulses is not less than the maximum value of the immediately preceding pulse so that the maximum values thereof are on the increase, and the voltage keeping the element voltage at a level which causes no electron accumulation to the emitter section during each interval between two of the successive pulses.

3. The electron-emitting apparatus according to claim 2, wherein the voltage applied between the lower electrode and the upper electrode during the interval between two of the successive pulses has an absolute value smaller than an absolute value of the coercive electric field voltage of the emitter section.

4. The electron-emitting apparatus according to claim 3, wherein the absolute value of the voltage applied between the lower electrode and the upper electrode during the interval between two of the successive pulses is 0 Volt (0V).

5. The electron-emitting apparatus according to any of claims 2 to 4,
wherein the length of time from the start of the rising to the end of the falling of each of the pulses is set shorter than the length of time from the end of the falling of the each pulse to the start of the rising of the subsequent pulse.

6. The electron-emitting apparatus according to any of claims 2 to 5,
wherein said drive voltage applying means is configured to apply the drive voltage between the upper electrode and the lower electrode repeatedly, and
wherein, during a period from a timing when the drive voltage is set at a level to cause the element voltage to reach the negative voltage till a timing when the drive voltage is set at a level to cause the element voltage to reach the negative voltage again to restart the electron accumulation operation after the drive voltage is set at a level to cause the element voltage to reach the positive voltage, the drive voltage when causing the element voltage to reach the positive voltage has such a waveform that the last pulse, which is generated immediately before the restart of the electron accumulation operation, has the longest pulse duration among said plurality of voltage pulses.

7. The electron-emitting apparatus according to any of claims 2 to 6,
wherein at least one pulse among said plurality of the voltage pulses has such a pulse-characteristic that a voltage according to said one pulse decreases to stop the emission of accumulated electrons at a point in time before the electron emission is completed if a maximum voltage of said one pulse continues to be applied.

8. The electron-emitting apparatus according to any of claims 2 to 7,
wherein said drive voltage applying means comprises:
an electron accumulation voltage generation source that generates a negative voltage at its both ends for accumulating electrons into said emitter section;
a sinusoidal wave generation circuit that generates a voltage fluctuating in a sinusoidal wave pattern at its both ends;
a keeping voltage generation source that generates a voltage at its both ends for keeping the element voltage at a voltage level at which no accumulation of electrons in the emitter section occurs during an interval of the successive pulses; and
a switching controlling means for connecting the upper electrode and the lower electrode respectively with said both ends of said electron accumulation voltage generation source, and thereafter, said both ends of said sinusoidal wave generation circuit and said both ends of said keeping voltage generation source in an alternate manner.

9. The electron-emitting apparatus according to any of claims 1 to 8, further comprising a phosphor which emits light by electron collision and which is disposed in the upper side of the upper electrode to oppose the upper electrode.

10. The electron-emitting apparatus according to claim 9, further comprising:
a collector electrode disposed near the phosphor; and
collector voltage applying means for applying a voltage to the collector electrode so that the collector electrode generates an electric field which attracts the emitted electrons toward the collector electrode.

11. An electron-emitting method employing an electron-emitting element, said element having:
an emitter section made of a dielectric material,
a lower electrode disposed below the emitter section, and
an upper electrode disposed above the emitter section to oppose the lower electrode, with the emitter section sandwiched therebetween, the upper electrode having a plurality of micro through holes and formed in such a manner that its surface around the circumference of the micro through holes facing the emitter section being apart from the emitter section, the method comprising:
setting an element voltage, which is the potential of the upper electrode relative to the potential of the lower electrode, at a negative voltage to supply electrons from the upper electrode to the emitter section and to accumulate the electrons in the emitter section;
increasing the element voltage to a first positive voltage to cause electrons accumulated in the emitter section to emit via the micro through holes; and
increasing the element voltage to a second positive voltage larger than the first voltage to cause electrons remaining in the emitter section to emit via the micro through holes.

12. The electron-emitting method according to claim 11 further comprising:
setting the element voltage at a third voltage which is smaller than the first voltage, and which does not cause the element to accumulate electrons in the emitter section, after increasing the element voltage to the first positive voltage and before increasing the element voltage to the second positive voltage.

13. The electron-emitting method according to claim 12, wherein an absolute value of the third voltage is smaller than an absolute value of the coercive electric field voltage of said emitter section.

14. The electron-emitting method according to claim 12 or claim 13,
wherein said step of increasing the element voltage to the first positive voltage includes applying the first positive voltage to the element for a first time period and said step of setting the element voltage at the third voltage includes applying the third voltage to the element for a time period longer than said first time period.

15. An electron-emitting method employing an electron-emitting element, said element having:
an emitter section made of a dielectric material,
a lower electrode disposed below the emitter section, and
an upper electrode disposed above the emitter section to oppose the lower electrode, with the emitter section sandwiched therebetween, the upper electrode having a plurality of micro through holes and formed in such a manner that its surface around the circumference of the micro through holes facing the emitter section being apart from the emitter section, said method comprising the steps of:
a step of setting an element voltage, which is the potential of the upper electrode relative to the potential of the lower electrode, at a negative voltage to supply electrons from the upper electrode to the emitter section to accumulate the electrons in the emitter section, and thereafter, increasing the element voltage to the first positive voltage to cause electrons accumulated in the emitter section to emit via the micro through holes and decreasing, before the completion of the electron emission, the element voltage to the third voltage which stops the electron emission and which does not cause the element to accumulate electrons in the emitter section and thereafter, increasing the element voltage again to the first positive voltage to cause electrons accumulated in the emitter section to emit via the micro through holes; and
a step of increasing the element voltage to the second positive voltage larger than the first voltage to cause electrons remaining in the emitter section to emit via the micro through holes.

16. The electron-emitting method according to claim 15 wherein, the element voltage is set at a voltage which does not cause the element to accumulate electrons in the emitter section, during a period between a time of increasing the element voltage to the first positive voltage and a time of increasing the element voltage to the second positive voltage.
